(19) Europäisches Patentamt
European Patent Office
Office européen des brevets

(11) Veröffentlichungsnummer: **0 119 453**
**B1**

# (12) EUROPÄISCHE PATENTSCHRIFT

(45) Veröffentlichungstag der Patentschrift: **13.06.90**

(51) Int. Cl.[5]: **C 08 B 37/16**

(21) Anmeldenummer: **84101424.4**

(22) Anmeldetag: **11.02.84**

(54) **Wasserlösliche, durch ionische Gruppen substituierte Cyclodextrin-polymere und Verfahren zu deren Herstellung.**

(30) Priorität: **14.02.83 HU 48883**

(43) Veröffentlichungstag der Anmeldung:
**26.09.84 Patentblatt 84/39**

(45) Bekanntmachung des Hinweises auf die Patenterteilung:
**13.06.90 Patentblatt 90/24**

(84) Benannte Vertragsstaaten:
**AT CH DE FR GB LI**

(56) Entgegenhaltungen:
**GB-A-1 091 637**
**US-A-3 426 011**

(73) Patentinhaber: **CHINOIN Gyógyszer és Vegyészeti Termékek Gyára RT.**
**To utca 1-5**
**H-1045 Budapest IV (HU)**

(72) Erfinder: **Szejtli, József, Dr.**
**Endrödi S. u. 38/40**
**H-1026 Budapest (HU)**
Erfinder: **Fenyvesi, Eva, Dr.**
**Szántó B. u. 5/b**
**H-1145 Budapest (HU)**
Erfinder: **Zsadon, Béla, Dr.**
**Villányi u. 64/b**
**H-1113 Budapest (HU)**
Erfinder: **Szilasi, Mária, Dr.**
**Villányi u. 64/b**
**H-1113 Budapest (HU)**
Erfinder: **Décsei, Lajos**
**Pentz K. u, 27**
**H-1221 Budapest (HU)**

(74) Vertreter: **Bartsch, Elisabeth, Dr.**
**Patentanwälte Lotterhos & Partner**
**Lichtensteinstrasse 3**
**D-6000 Frankfurt am Main 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 119 453 B1

## Beschreibung

Die Erfindung betrifft wasserlösliche, durch ionische Gruppen substituierte Cyclodextrin-polymere, die Struktureinheiten der allgemeinen Formel (I)

$$\overset{(OR^{2'})_s}{\overset{|}{CD}}\{-O-(CH_2-\overset{OR^2}{\overset{|}{CH}}-R-O)_m-\overset{(OR^{2'})_t}{\overset{|}{CD}}[(-O-CH_2-\overset{OR^2}{\overset{|}{CH}}-R')_n X]_r\}_p \qquad (I)$$

enthalten, worin

CD eine aus einem α-, β- oder γ-Cyclodextrinmolekül durch Abspaltung von p+s oder 1+t+r Hydroxylgruppen erhaltene Gruppe,

R und R' unabhängig voneinander

$-CH_2-$, $-CHOH-CH_2-$, $-CH_2-O-(CH_2)_2-O-CH_2-CHOH-CH_2-$, $-CH_2-O-CH_2-CHOH-CH_2-$

oder $-CH_2-O-(CH_2)_4-O-CH_2-CHOH-CH_2-$,

X eine sekundäre oder tertiäre Aminogruppe, $-OR^1$ oder $-OR^2$ bedeuten, worin

$R^1$ Wasserstoff oder -wenn r nicht 0 ist — eine aus einem α, β- oder γ-Cyclodextrinmolekül durch Abspalten einer Hydroxylgruppe erhaltene Gruppe,

$R^2$, das gleiche oder verschiedene Bedeutungen haben kann, Wasserstoff, $-PO(OH)_2-$, $-SO_2OH$, $-R^3-(COOH)_u$, $-R^3-(SO_2OH)_u$, $-R^3-(NR^4R^5)_u$ oder eine aus einem α-, β- oder γ-Cyclodextrinmolekül durch Abspalten einer Hydroxylgruppe erhaltene Gruppe bedeuten,

oder ein, zwei oder drei $R^2$— Substituenten gemeinsam eine Gruppe der Formel $-R^3-NR^4-R^3-$ oder $(-R^3-)_3N$ bilden,

$R^{2'}$ die gleiche Bedeutung wie $R^2$ hat, aber nicht die aus den Cyclodextrinmolekülen erhaltenen Gruppen bedeutet,

$R^3$ eine (u+1)- wertige, aus einem Alkan oder einem araliphatischen Kohlenwasserstoff mit 1—10 C-Atomen erhältliche Grupp bedeutet, deren der Polymerkette näher stehendes Endkohlenstoffatom gegebenenfalls durch eine Oxogruppe substituiert sein kann,

$R^4$ und $R^5$ unabhängig voneinander Wasserstoff, gebenenfalls durch Halogen substituiertes $C_{1-4}$-Alkyl, Aryl mit 6—10 Atomen oder eine durch deren Kombination erhältliche Aralkyl- oder Alkarylgruppe,

m und n unabhängig voneinander eine ganze Zahl von 1 bis 10,

r eine ganze Zahl von 0 bis 23,

p eine ganze Zahl von 1 bis 24,

s und t unabhängig voneinander eine ganze Zahl von 0 bis 7,

u eine ganze Zahl von 1 bis 5 bedeuten,

mit der Bedingung, daß

m, n, r, t und u auch in den Seitenketten innerhalb einer Einheit variieren können, und wenn

CD eine aus einem α-Cyclodextrin erhaltene Gruppe ist, $p+s \leq 18$ und $r+t \leq 17$ sind,

und wenn

CD eine aus einem β-Cyclodextrin erhaltene Gruppe ist, $p+s \leq 21$ und $r+t \leq 20$ sind,

und wenn

CD eine aus einem γ-Cyclodextrin erhaltene Gruppe ist, $p+s \leq 24$ und $r+t \leq 23$ sind,

deren CD-Gehalt 30—70% beträgt und die ein durchschnittliches MG von 2000—15000 aufweisen.

Die neuen Polymere der Erfindung enthalten in der Praxis etwa 2 bis 10 Cyclodextrinringe und tragen die oben angebenen, ionischen Substituenten an dem Cyclodextrinring und/oder der die Cyclodextrinringe verbindenden Kette. Sowohl die Länge der Ketten als auch der Grad der Substitution können innerhalb eines Moleküls variieren.

Die Cyclodextrin-polymerprodukte sind fest, lösen sich gut in Wasser und in einigen organischen Lösungsmitteln -z.B. Dimethyl-formamid, Pyridin- und können nicht nur Einschlußkomplexe sondern auch Salze bilden. Ihr Cyclodextringehalt begträgt 30 bis 70%; ihr durchschnittliches MG 2000 bis 15000.

Es ist bekannt, daß die Cyclodextrine aus 6, 7 oder 8 Glucopyranoseeinheiten aufgebaute, cyclische, nicht reduzierende Oligosaccharide sind, die durch den enzymatischen Abbau von Stärke erhalten werden. Ihre Anwendung in der Praxis basiert hauptsächlich auf ihrer Fähigkeit, Einschlußkomplexe zu bilden (Szejtli, J.: Cyclodextrins and their Inclusion Complexes, Ed. Akadémiai Kiadó, Budapest, 1982). Die Reaktionsfähigkeit der am sechsgliedrigen α-, siebengliedrigen β-bzw. achtgliedrigen γ-Cyclodextrinring gebunderen, primären und sekundären Hydroxylgruppen ermöglicht, die Herstellung von Derivaten mit hohem MG (Cyclodextrin-polymeren).

Aus der Literatur sind wasserlösliche und wasserunglösliche, aber im Wasser quellende Cyclodextrin-polymere bekannt. Letztere sind infolge des größeren MG und der Vernetzungsstruktur in keinem Lösungsmittel löslich.

Wasserlösliche Cyclodextrin-polymere sind auf zwei Wegen zugänglich: aus Cyclodextrin wird ein ungesättigtes Monomer hergestellt und polymerisiert [J. Polym. Sci. Lett. *13*, 357 (1975)] oder Cyclodextrin wird durch eine geeignetes, bifunktionelles Reagens, zweckmäßig durch eine Diepoxyverbindung oder Epichlorhydrin vernetzt (GB—PS 1 244 990 und HU—PS 180 597).

Bei beiden Verfahren werden Produkte mit mittlerem MG erhalten, die in Wasser leicht löslich sind und Einschlußkomplexe bilden. Die Stabilität dieser Komplexe ist im allgemeinen höher als die der monomeren Cyclodextrine, was mit der vorteilhaften räumlichen Anordnung der miteinander verbundenen Ringe und, beim β-Cyclodextrin, mit der höheren Löslichkeit des Polymers erklärt wird [Macromolecules *9*, 705 (1976); Proceedings of I. Int. Symp. on Cyclodextrins (1981) 345].

Mit diesen bekannten Cyclodextrin-polymeren kann die Komplexbildung auf vielen Gebieten durchgeführt werden, d.h. praktisch in allen den Fällen, in denen das einzuschließende Molekül, das sogenannte "Gastmolekül", eine neutrale Gruppe ist. Die Komplexbildung der Salze wird häufig durch ihren Ionencharakter erschwert. Aus diesem Grunde sollte ein Cyclodextrinpolymer vorteilhaft sein, das sowohl die zur Salzbildung notwendigen sauren oder basischen Substituenten und außerdem die zur Bildung der Einschlußkomplexe notwendigen Cyclodextrinringe enthalten würde. Aus der Fachliteratur ist aber keine Lösung bekannt, wonach diese beiden verschiedenen Funktionselemente einen Teile eines Moleküls mit hohem Molekulargewicht bilden, obwohl Cyclodextrinderivate bekannt sind, in denen die Cyclodextrinringe durch verschiedene, zur Salzbildung fähige Gruppen, z.B. Carboxyalkyl-, Sulfoalkyl-, bzw. Aminoalkylgruppen, substituiert sind [Stärke *23*, 134 (1971) und US—PS 3 553 191]. Diese substituierten Cyclodextrine sind aber infolge ihres relativ niedrigen Molekulargewichts nicht vortgeilhafter als die unsubstituierten Cyclodextrine.

Ziel der Erfindung war die Herstellung von wasserlöslichen modifizierten Cyclodextrin-polymeren, die nicht nur zur Komplexbildung, sondern auch zur Salzbildung befähigt sind und infolgedessen in weiteren Bereichen angewendet werden können.

Es wurde überraschenderweise gefunden, daß wasserlösliche, durch ionische Gruppen substituierte Cyclodextrin-polymere diese Forderungen erfüllen und daß man diese Cyclodextrin-polymere in einfacher Weise herstellen kann, wenn man ein durch solche ionische Gruppen in an sich bekannter Weise substituiertes Cyclodextrin polymerisiert, oder das Cyclodextrin gleichzeitig polymerisiert und durch ionische Gruppen substituiert, oder ein Cyclodextrinpolymer, das keine ionischen Gruppen enthält, durch ionische Gruppen substituiert.

Die Erfindung betrifft auch die Herstellung von wasserlöslichen, durch ionische Gruppen substituierte Cyclodextrin-polymere, die Struktureinheiten der allgemeinen Formel

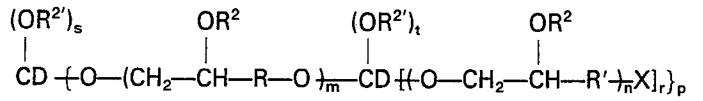
(I)

enthalten, worin

CD, R, R', X, $R^2$, m, n, p, r, s und t die oben angegebene Bedeutung haben,

deren CD-Gehalt 30—70% beträgt und die ein durchsnittliches MG von 2000—15000 aufweisen, wonach man

a) ein Mol α-, β- oder γ-Cyclodextrin mit 0,1 bis 7 Mol eines Halogenderivats der Formel:

$$R^{2''}\text{—Hal}$$

worin Hal Halogen ist und

$R^{2''}$ die gleiche Bedeutung wie $R^{2'}$ hat, aber nicht Wasserstoff, $—PO(OH)_2$ oder $—SO_2OH$ ist, oder mit 0,1 bis 7 Mol eines Sultons, das sich von einer Hydroxysulfonsäure der Formel

$$HO—R^3—SO_2OH$$

worin $R^3$ die oben angegebene Bedeutung hat, herleitet, in Gegenwart von 0,2 bis 14 Mol eines Alkalimetall- oder Erdalkalimetallhydroxyds in 0,7 bis 1,0 l Wasser in an sich bekannter Weise umsetzt und die erhaltene Reaktionsmischung, die das durch ionische Gruppen substituierte Cyclodextrin enthält — bezogen auf 1 Mol in der Mischung vorliegendes Cyclodextrin — mit 5 bis 15 Mol Epichlorhydrin oder einem Diepoxyderivat der Formel

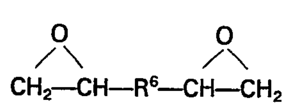
(II)

worin

$R^6$ eine direkte Bindung,

$$—CH_2—O—CH_2—,\ —CH_2—O—CH_2—CH_2—O—CH_2—$$

oder $—CH_2—O—(CH_2)_4—O—CH_2—$ bedeutet,

nach Zusatzt von 5 bis 15 Mol Alkalimetall- oder Erdalkalimetallhydroxyd und 1,8 bis 2,5 l Wasser bei einer Temperatur im Bereich von 40 bis 80°C umsetzt, oder

b) ein Mol α-, β- oder γ-Cyclodextrin mit 0,1 bis 7 Mol eines Halogenderivates der Formel

$$R^{2''}\text{—Hal}$$

worin Hal und $R^{2''}$ die oben angegebene Bedeutung haben, oder mit einem Sulton, das sich von einer Hydroxysulfonsäure der Formel

$$HO—R^3—SO_2OH$$

worin $R^3$ die oben angegebene Bedeutung hat, herleitet, oder mit einem primären oder secundären Amin oder einer Hydroxylverbindung der Formel

$$R^{2''}—OH$$

worin $R^{2''}$ die oben angegebene Bedeutung hat, und mit 5 bis 15 Mol Epichlorhydrin oder einem Diepoxyderivat der Formel II, worin $R^6$ die oben angegebene Bedeutung hat, in Gegenwart von 5 bis 20 Mol Alkalimetall- oder Erdalkalimetallhydroxyd und 2,5 bis 3,5 l Wasser umsetzt, oder,

c) eine aus 1 Mol α-, β- oder γ-Cyclodextrin durch Umsetzung mit 5 bis 15 Mol Alkalimetall- oder Erdalkalimetallhydroxyd, 2,5 bis 3,5 l Wasser und 5 bis 15 Mol! Epichlorhydrin oder einem Diepoxyderivat der allgemeinen Formel II, worin $R^6$ die oben angegebene Bedeutung hat, in an sich bekannter Weise erhaltene Cyclodextrin-polymerlösung — bezogen auf 1 Mol des darin enthaltenen Cyclodextrins — mit 0,1 bis 7 Mol eines Halogenderivats der Formel

$$R^{2''}—Hal$$

worin Hal und $R^{2''}$ die oben angegebene Bedeutung haben, oder mit einem Sulton, das sich von einer Hydroxysulfonsäure der Formel

$$HO—R^3—SO_2OH$$

worin $R^3$ die oben angegebene Bedeutung hat, herleitet, in Gegenwart von 0,2 bis 14 Mol alkalimetall- oder Erdalkalimetallhydroxyd umsetzt, oder

d) zur Herstellung von Cyclodextrin-polymeren mit den Struktureinheiten der Formel I, worin $R^2$ und/oder $R^{2'}$ die oben angegebenen anorganischen oder organischen Acylgruppen bedeuten und die übrigen Substituenten die oben angegebene Bedeutung haben, ein Mol α-, β- oder γ-Cyclodextrin mit 5 bis 15 Mol Alkalimetall- oder Erdalkalimetallhydroxyd, 2,5 bis 3,5 l Wasser und mit 5 bis 15 Mol Epichlorhydrin oder einem Diepoxyderivat der Formel II, worin $R^6$ die oben angegebene Bedeutung hat, in an sich bekannter Weise umsetzt und das erhaltene Cyclodextrin-polymer unter Erhitzen mit dem entsprechenden anorganischen oder organischen Säureanhydrid in Anwesenheit eines organischen Lösungsmittels und/oder eines Saürebinders oder mit dem Salz der entsprechenden Säure in Abwesenheit eines organischen Lösungsmittels und/oder Säurebinders umsetzt und

aus der nach dem Verfahren a), b), c) oder d) erhaltenen Reaktionsmischung das durch ionische Gruppen substituierte Cyclodextrinpolymer nach Entfernung der niedermolekularen Nebenprodukte, der gelösten Salze und des Wassers in fester Form isoliert.

Bei dem Verfahren gemäß Erfindung wird das durch ionische Gruppen substituierte Cyclodextrin-polymer in Form einer wässrigen Lösung erhalten. In einigen Fällen, wenn der Komplex in wässriger Lösung verwendet werden soll, kann man dieses rohe Reaktionsgemisch gebenenfalls ohne Enfernung der Salze und der niedermolekularen Nebenprodukte benutzen. Wenn dagegen das Polymer in fester Form verwendet soll, muß zur Isolierung des Polymers das Reaktionsgemisch entsalzt und das Wasser entfernt werden.

Die Entfernung der Salze und der niedermolekularen Nebenprodukte erfolgt zweckmässig durch Dialyse. Während der Dialyse werden nicht nur die Salze, sonden auch die niedermolekularen Nebenprodukte aus dem Reaktionsgemisch entfernt, so daß durch Verdampfen des Dialysats eine reineres Produkt gewonnen wird.

Als Cyclodextrin können sowohl α-, als auch β- oder γ-Cyclodextrin in dem Verfahren gemäß Erfindung verwendet werden, wobei es von dem angewandten Cyclodextrin abhängt. ob sich das erhaltene Produkt zum Einschluß von kleinen oder großen "Gastmolekülen" eignet.

Sowohl die Polymerisation, als auch die meisten der Substitutionsreaktionen der Erfindung finden in alkalischen Medium statt. Um eine alkalische Reaktion zu gewährleisten, können Alkalimetall oder Erdalkalimetallhydroxyde, z.B. Natrium- oder Kaliumhydroxyd, Calcium- oder Bariumhydroxyd, verwendet werden. Natriumhydroxyd wird der Vorzug gegeben.

Als Vernetzungsmittel zum Verbinden den Cyclodextrinringe und zur Bildung der Hydroxyalkyl-Seitenketten werden Epichlorhydrin oder Diepoxyderivate der allgemeinen Formel (II) verwendet. Bevorzugte Vertreter der Diepoxyderivate sind Diepoxypropyläther und 1,4-Di-(epoxypropoxy)-butan. Mit allen diesen Epoxyden läßt sich die gewünschte Polymerstruktur aufbauen. Ob die Struktur der erhaltenen Polymere dicht oder locker ist, hängt auch von der Kettenlänge des angewandten Vernetzungsmittels ab.

Im Verfahren der Erfindung können Halogenderivate de Formel $R^{2''}$—Hal oder Hydroxyverbindungen der allgemeinen Formel $R^{2''}$—OH zum Einführen der ionischen Gruppen benutzt werden. Je nach der Bedeutung von $R^{2''}$ handelt es sich bei diesen Verbindungen um halogenierte Carbonsäuren, z.B.

Chloressigsäure, Chlorpropionsäure, Bromessigsäure, Chlor- oder Brombernsteinsäure, 2-Chlor- oder 2-Bromisobuttersäure, 2-Chlor- oder 2-Brom-1,2,3-tricarboxypropan usw., bzw. um Sulfonsäuren, z.B. Chlormethansulfonsäure, 3-Chlorpropansulfonsäure, b.z.w. Aminokohlenwasserstoffe. z.B. 3-Dimethylamino-chlorpropan oder Hydroxycarbonsäuren, Hydroxysulfonsäuren oder Hydroxyamine. Mit Hilfe dieser Verbindungen können eine oder mehrere Carboxy-, Sulfon- oder Aminogruppen enthaltende $R^3$-Substituenten in das Polymer eingeführt werden.

Mit den von den Hydroxysulfonsäuren der allgemeinen Formel $HO—R^3—SO_2OH$ herleitbaren Sultonen können durch Sulfongruppen substituierte $R^3$-Substituenten in das Molekül eingeführt werden.

Wird ein Halogenderivat der Formel $R^{2''}$—Hal verwendet, worin $R^{2''}$ eine Aminoalkylgruppe der allgemeinen Formel $—R^3—(NR^4R^5)_u$ bedeutet, dessen Substituenten $R^4$ und/oder $R^5$ durch Halogen substituiert sind, erhält man ein Produkt, in dem zwei oder drei der Substituenten $R^2$ eine Gruppe der Formel $—R^3—NR^4—R^3—$, bzw. $(—R^3—)_3N$ bilden. Zwei oder drei Struktureinheiten der allgemeinen Formel (I) können auch durch eine, zwei oder drei dieser Gruppen verbunden sein.

Wird ein primäres oder sekundäres Amin während des Verfahrens b) in das Reaktionsgemisch eingeführt, wird ein Polymer erhalten, das anstelle von X eine sekundäre oder tertiäre Aminogruppe enthält.

Zur Herstellung von Polymeren, die anstelle von $R^2—PO(OH)_2$ oder $—SO_2OH$ oder die organische Acylgruppe der Formel $—R^3—(CO_2H)_u$ enthalten, deren der Polymerkette näher stehendes Endkohlenstoffatom durch eine Oxygruppe substituierte ist, werden die an dieser Stelle unsubstituierten Polymere mit einem anorganischen oder organischen Säureanhydrid acyliert. Beispiele für solche anorganischen oder organischen Säureanhydride sind z.B. Schwefeltrioxyd, Phosphorpentoxyd, Bernsteinsäureanhydrid sowie Adipinsäureanhydrid. Gegebenenfalls kann man diese Anhydride in Anwesenheit eines Säurebinders, bzw. in der Form ihrer Komplexe (Addukte) verwenden. Zur Vermeidung von Nebenreaktionen wird die Reaktion zweckmäßig bei niedriger Temperatur, bzw. in einem organischen Lösungsmittel durchgeführt.

Die der Phosphorsäure entsprechende Acylgruppe kann in das Polymer auch in der Weise eingeführt werden, daß est mit einem Phosphat erhitzt wird. Einige Beispiele für derartige Phosphate sind: die Alkalimetallphosphate, z.B. Natriumdihydrogenphosphat, Dinatriumhydrogenphosphat oder Natriumpyrophosphat.

Bei Verfahrensvariante a) werden Polymere mit niedrigerem Molekulargewicht, bei Verfahrensvarianten b) bis d) werden Polymere mit höheren Molekulargewichten erhalten.

Die Polymere der Erfindung, die Struktureinheiten der allgemeinen Formel (I) enthalten, haben hohes Molekulargewicht. Auf Grund ihrer Fähigkeit zur Bildung von Einschlußkomplexen und von Salzen sind sie in weiten Bereichen der Industrie anwendbar.

So können sie zu Bildung und Stabilisierung kolloidaler disperser Systeme, z.B. zur Herstellung verschiedener Emulsionen und Suspensionen in der photochemischen Industrie mit Erfolg verwendet werden.

Die durch ionische Gruppen substituierten Cyclodextrin-polymere können zur chromatographischen Trennung von nicht-ionischen Verbindungen an Ionenaustauschersäulen benutzt werden. Die für die Einschlußkomplexbildung geeignete Substanz wird in Form eines Komplexes mit dem Cyclodextrin-polymer zusammen verzögert eluiert, wobei die Prinzipien der Ionenaustausch- und der Inclusions-chromatographie gleichzeitig zur Geltung kommen.

Die Erfindung wird durch die folgenden Beispiele näher erläutert, ohne die Erfindung darauf zu beschränken.

## Beispiel 1

Wasserlösliches β-Cyclodextrin-polymer, das Carboxymethylgruppen enthält

In 27,4 g (22 ml, 0,16 Mol) einer 23,3%igen Natriumhydroxylösung löst man 15 g (0,16 Mol) Chloressigsäure und 25 g (0,022 Mol) β-Cyclodextrin bei Raumtemperatur und tropft der Lösung innerhalb von 2,5 Stunden 22 ml (0,1 Mol) einer 23,3%igen Natriumhydroxydlösung zu. Die Reaktionsmischung erhitzt man auf 60°C und rührt eine Stunde. Dann fügt man der Reaktionsmischung zunächst eine Lösung von 8,8 g (0,22 Mol) Natriumhydroxyd in 28 ml Wasser und danach 17,3 ml (20,4 g, 0,22 Mol) Epichlorhydrin innerhalb von 1,5 Stunden zu und rührt die erhaltene Mischung 0,5 Stunden bei 60°C. Die 102 ml Reaktionsmischung werden auf Raumtemperatur gekühlt, sie enthalten 0,38 Mol Natriumchlorid. Die Reaktionsmischung wird salzfrei dialysiert. Das Volumen des Dialysats beträgt 655 ml und sein Gehalt an Trockensubstanz 5,1%. Durch Lyophilisation werden 32,5 g Endprodukt erhalten, dessen Cyclodextringehalt nach iodometrischer Bestimmung 56,4% beträgt. "(Acta Chim. Hung., *100*, 265 (1979))" dessen Carboxylgehalt nach titrimetrischer Bestimmung mit 0,02 n Natriumhydroxydlösung 9,2% beträgt, was 4,1 Äquivalenten Carboxylgruppe pro Cyclodextrineinheit entspricht. Durchschnittliches.

MG: 2200 (nach der Molekülmassenverteilung bestimmt durch Gelchromatographie).

## Beispiel 2

Wasserlösliches α-Cyclodextrin-polymer, das Carboxymethylgruppen enthält

In 71 g (57 ml, 0,44 Mol) einer 25%igen Natriumhydroxylösung löst man 42 g (0,44 Mol) Chloressigsäure und 100 g (0,10 Mol) α-Cyclodextrin bei Raumtemperatur, tropft der erhaltenen Lösung 57 ml (0,44 Mol) einer 23,3%igen Natriumhydroxydlösung innerhalb von 2,5 Stunden zu, erhitzt die erhaltene

Mischung auf 40°C und rührt eine Stunde. In die erhaltene Reaktionsmischung gibt man zunächst eine Lösung von 35,2 g (0,88 Mol) Natriumhydroxyd in 170 ml Wasser, danach — innerhalb von 1,5 Stunden — 69 ml (81,4 g, 0,88 Mol) Epichlorhydrin und rührt die Reaktionsmischung 0,5 Stunden bei 60°C. Die so erhaltenen 420 ml Reaktionsmischung, die 1,32 Mol Natriumchlorid enthalten, werden dialysiert. Das Volumen des Dialysats beträgt 2120 ml und der Gehalt an Trockensubstanz 6,3%. Durch Lyophilisation werden 133,5 g Festprodukt erhalten. Cyclodextringehalt: 57.3%, Carboxylgehalt: 7,3%, was 2,8 Äquivalenten Carboxylgruppe pro Cyclodextrineinheit entspricht. Durchschnittliches MG: 2350.

Beispiel 3

Wasserlösliches γ-Cyclodextrin-polymer, das Carboxymethylgruppen enthält

Man löst 60 g (1,5 Mol) Natriumhyroxyd in 540 ml Wasser und gibt in diese Lösung 142 g (1,5 Mol) Chloressigsäure und 855 g (0,66 Mol) α-Cyclodextrin bei Raumtemperatur. Der so erhaltenen Reaktionsmischung tropft man 240 g (1,5 Mol) einer 25%igen Natriumhydroxydlösung innerhalb von 2,5 Stunden bei der gleichen Temperatur zu. Die Reaktionsmischung erhitzt man auf 60°C und rührt eine Stunde. Dann gibt man zunächst 1450 g (7,5 Mol) einer 20,7%igen Natriumhydoxydlösung und danach 588 ml (694 g, 7,5 Mol) Epichlorhydrin innerhalb von 1,5 Stunden zu, rührt die Reaktionsmischung 0,5 Stunden und kühlt sie danach ab. Die erhaltenen 3000 ml Reaktionsmischung werden mit 300 ml 5n Salsäure angesäuert und salzfrei dialysiert. Nach der Lyophilisation erhält man 1015 g Produkt. Cyclodextringehalt: 54,2%, Carboxylgehalt: 3,8%, dies entspricht 2,0 Äquivalenten Carboxylgruppe pro Cyclodextrineinheit. Durchschnittliches MG: 2560.

Beispiel 4

Wasserlösliches β-Cyclodextrin-polymer, das Carboxymethylgruppen enthält

In 1920 g (10,5 Mol) einer 21,9%igen Natriumhydroxydlösung löst man 850 g (0,75 Mol) β-Cylodextrin bei 60°C. in die erhaltene alkalische Lösung gibt man zunächst 142 g (1,5 Mol) Chloressigsäure in 520 ml Wasser und danach tropfenweise 588 ml (694 g, 7,5 Mol) Epichlorhydrin innerhalb von 1,5 Stunden. Die Reaktionsmischung rührt man eine Stunde bei 60°C und kühlt sie dann ab. Die erhaltenen 3300 ml Reaktionsmischung werden mit 5n Salzsäure angesäuert und salzfrei dialysiert. Nach der Lyophilisierung erhält man 1010 g Substanz. Cyclodextringehalt: 56,2%, Carboxylgehalt: 3,4%, dies entspricht 1,5 Äquivalenten Carboxylgruppe pro Cyclodextrineinheit. Durchschnittliches MG: 4970.

Beispiel 5

Wasserlösliches β-Cyclodextrin-polymer, das Dimethylaminogruppen enthält

In 2014 g (7,6 Mol) einer 15,1%iger Natriumhydroxydlösung löst man 720 g (0,63 Mol) β-Cylodextrin bei 40°C und gibt danach 104,5 g (1,3 Mol) Dimethylamoniumchlorid und sodann 496 ml (585 g, 6,3 Mol) Epichlorhydrin innerhalb von 1,5 Stunden zu. Die erhaltene Reaktionsmischung wird bei der gleichen Temperatur eine Stunde gerührt. Aus der salzfrei dialysierten Lösung erhält man nach Lyophilisierung 730 g Produkt. Cyclodextringehalt: 54,3%, Stickstoffgehalt: 1,45%, was 2,1 Äquivalenten Dimethylaminogruppen pro Cyclodextrineinheit entspricht. Durchschnittliches MG: 4300.

Beispiel 6

Wasserlösliches β-Cyclodextrin-polymer, das Sulfopropyloxygruppen enthält

11,34 g (0,01 Mol) β-Cyclodextrin suspendiert man in 30 ml einer 50%igen Natriumhydroxydlösung, fügt dann 1,22 g (0,01 Mol) Propansulton zu und hält die Reaktionsmischung einen Tag bei 50°C unter gelegentlichem Rühren. Nach Zusatz von 30 ml destilliertem Wasser gibt man der so erhaltenen Lösung 8,6 ml (10,2 g, 0,11 Mol) Epichlorhydrin tropfenweise innerhalb von 1,5 Stunden zu, rührt die erhaltene Reaktionsmischung bei der gleichen Temperatur eine Stunde und kühlt dann ab. Aus der salzfrei dialysierten Lösung werden 14,5 g Produkt erhalten. Cyclodextringehalt: 49,5%, Schwefelgehalt: 1,6%, durchschnittliches MG: 4860.

Beispiel 7

Wasserlösliches β-Cyclodextrin-polymer, das Carboxymethylgruppen enthält

In 3300 g (5,75 Mol) 6,9%iger Natriumhydroxydlösung löst man 1285 g (1,13 Mol) β-Cylodextrin und 213,5 g (2,26 Mol) Chloressigsäure bei 80°C Danach tropft man 450 ml (531 g, 5,74 Mol) Epichlorhydrin innerhalb von 1,5 Stunden zu und rührt die erhaltene Reaktionsmischung 0,5 Stunden bei derselben Temperatur. Man erhält so 780 g salzfreies, lyophilisiertes Produkt. Cyclodextringehalt: 58,5%, Carboxylgehalt: 2,9%, dies entspricht 1,3 Äquivalenten Carboxylgruppe pro Cyclodextrineinheit. Durchschnittliches MG: 2800.

Beispiel 8

Wasserlösliches β-Cyclodextrin-polymer, das Carboxymethylgruppen enthält

In 340 g (1,0 Mol) 11,8%iger Natriumhydroxydlösung löst man 100 g (0,088 Mol) β-Cyclodextrin und 0,8 g (0,009 Mol) Chloressigsäure bei 60°C und tropft dann 103,5 ml (1,32 Mol, 122,1 g) Epichlorhydrin zu. Die Reaktionsmischung rührt man eine Stunde bei der gleichen Temperatur. Man erhält so 160 g salzfreies, lyophilisiertes Produkt. Cyclodextringehalt: 45%, Carboxylgehalt: 0,1%, was 0,06 Äquivalenten Carboxylgruppe pro Cyclodextrineinheit entspricht. Durchschnittliches MG: 4760.

Beispiel 9

Wasserlösliches β-Cyclodextrin-polymer, das Carboxymethylgruppen enthält

In 65,3 g (0,22 Mol) 13,5%iger Natriumhydroxydlösung löst man 25 g (0,022 Mol) β-Cylodextrin und tropft 17,3 ml (20,4 g, 0,22 Mol) Epichlorhydrin bei 60°C innerhalb von 1,5 Stunden zu. Danach gibt man zunächst 4,2 g (0,044 Mol) Chloressigsäure, gelöst in 4,4 g (0,044 Mol) 40%iger Natriumhydroxydlösung und dann 4,4 g (0,044 Mol) 40%iger Natriumhydroxydlösung tropfenweise innerhalb von 2 Stunden zu. So werden 26 g salzfreies, lyophilisiertes Produkt erhalten. Cyclodextringehalt: 55,9%, Carboxylgehalt: 0,3%, was 0,14 Äquivalenten Carboxylgruppe pro Cyclodextrineinheit entspricht. Durchschnittliches MG: 5100.

Beispiel 10

Wasserlösliches β-Cyclodextrin-polymer, das Carboxymethylgruppen enthält

In 250 ml 1n Natriumhydroxydlösung löst man 100 g (0,088 Mol) β-Cyclodextrin bei 60°C und gibt dann 77,5 g (0,45 Mol) Äthylenglykol-diepoxypropyläther innerhalb von 1,5 Stunden zu. In der so erhaltenen Reaktionsmischung löst man 8,3 g (0,088 Mol) Chloressigsäure und rührt eine Stunde bei der gleichen Temperatur. So erhält man 90 g salzfreies, lyophilisiertes Produkt. Cyclodextringehalt: 58%, Carboxylgehalt: 1,8%, was 0,8 Äquivalenten Carboxylgruppe pro Cyclodextrineinheit entspricht. Durchschnittliches MG: 4500.

Beispiel 11

Saurer Bernsteinsäureester von α-Cylodextrin-polymer

9,35 g dialysiertes, trockenes α-Cyclodextrin-polymer, das 52% (4,86 g, 6 mMol) α-Cylodextrin chemisch gebunden enthält und eine durchschnittliche Molekülmasse von 4400 aufweist, löst man in 40 ml absolutem Pyridin in einem Rundkolben, der mit einer Chlorcalciumeinheit ausgerüstet ist. Zu dieser Lösung gibt man 1,6 g (16 mMol) Bernsteinsäureanhydrid zu, führt die Mischung auf einem heißen Wasserbad unter Schütteln in eine Lösung über, die man 2 Stunden auf dieser Temperatur hält. Den größten Teil des Pyridins destilliert man im Vakuum ab. Zu dem so erhaltenen Rückstand gibt man 300 ml Wasser und destilliert dann das restliche Pyridin mit Wasserdampf ab. Die als Rückstand erhaltene wässrige Lösung dialysiert man gegen destilliertes Wasser und trocknet sie dann durch Lyophilisation. So erhält man 9,37 g lyophilisiertes, festes, wasserlösliches Polymer, das einen α-Cyclodextringehalt von 47,2% und einen Gehalt an freier Carboxylgruppe von 1,9 Äquivalent/Mol α-Cyclodextrin aufweist. Durchschnittliches MG: 4900.

Beispiel 12

Saurer Adipinsäureester von β-Cyclodextrin

11,56 g dialysiertes und getrockenetes β-Cyclodextrin-polymer, das 54% (6,24 g, 5,5 Mol) β-Cylodextrin chemisch gebunden enthält und ein durchschnittliches MG von 4800 aufweist, löst man in 50 ml absolutem Pyridin und setzt es mit 2,3 g (18 Mol) Adipinsäureanhydrid drei Stunden in der Beispiel 11 beschriebenen Weise um. In der dort beschriebenen Weise erhält man nach Dialyse und Lyophilisation 11,6 g eines festen, wasserlöslichen Polymers, das einen ß-Cyclodextringehalt von 49% und ein Gehalt an freiem Carboxyl von 1,7 Äquivalent/Mol β-Cylodextrin aufweist. Durchschnittliches MG: 5200.

Beispiel 13

Saurer Phosphorsäureester von β-Cylodextrin

In der neutralen (pH = 7) konzentrierten wässrigen Lösung von 12,6 g β-Cylodextrin-polymer (das 54% β-Cylodextrin chemisch gebunden enthält und ein durchschnittliches MG von 4100 aufweist) löst man 7,3 g Natriumdihydrogenphosphat-Monohydrat und 10,6 g Dinatriumhydrogenphosphat-Heptahydrat. Die erhaltene Lösung dampft man zur Trockene eine, erhitzt den Rückstand drei Stunden auf einem Ölbad von 150°C, kühlt dann, löst in destilliertem Wasser, dialysiert gegen destilliertes Wasser und lyophilisiert. So erhält man 11,1 g festes, wasserlösliches Polymer, dessen Gehalt an chemisch gebundenem β-Cyclodextrin 52%, dessen Phosphorgehalt 1,5% und dessen durchschnittliches MG: 4800 beträgt.

Beispiel 14

Saurer Schwefelsäureester von γ-Cyclodextrin

15 g Träthylamin-Schwefeltrioxyd-Komplex gibt man zu 200 ml Dimethylformamid und löst dann 7,8 g trockenes γ-Cyclodextrin-polymer, das einen γ-Cyclodextrin-Gehalt von 50% und eine durchschnittliche Molekülmasse von 6800 aufweist, unter Rühren bei 0°C. Die Lösung hält man 24 Stunden bei 0°C, verdünnt sie danach unter Kühlen auf das dreifache Volumen, dialysiert gegen destilliertes Wasser und lyophilisiert. So werden 6,8 g eines festen, wasserlöslichen Produktes erhalten, das einen Gehalt an chemisch gebundenem γ-Cyclodextrin von 47%, einen Schwefelgehalt von 2,5% und ein durchschnittliches MG von 6600 aufweist.

**Patentansprüche für die Vertragsstaaten: CH DE FR GB LI**

1. Wasserlösliche, durch ionische Gruppen substituierte Cyclodextrinpolymere, die Struktureinheiten der allgemeinen Formel

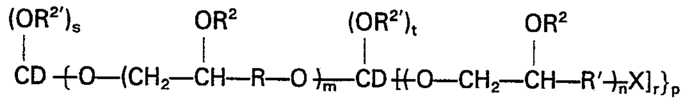

(I)

enthalten, worin

CD eine aus einem α-, β- oder γ-Cyclodextrinmolekül durch Abspaltung von p+s oder 1+t+r Hydroxylgruppen erhaltene Gruppe,

R und R′ unabhängig voneinander

$—CH_2—$, $—CHOH—CH_2—$, $—CH_2—O—(CH_2)_2—O—CH_2—CHOH—CH_2—$, $—CH_2—O—CH_2—CHOH—CH_2—$

oder $—CH_2—O—(CH_2)_4—O—CH_2—CHOH—CH_2—$,

X eine sekundäre oder tertiäre Aminogruppe, $—OR^1$ oder $—OR^2$ bedeuten, worin

$R^1$ Wasserstoff oder -wenn r nicht 0 ist — eine aus einem α, β-, oder γ-Cyclodextrinmolekül durch Abspalten einer Hydroxylgruppe erhaltene Gruppe,

$R^2$, das gleiche oder verschiedene Bedeutungen haben kann, Wasserstoff, $—PO(OH)_2—$, $—SO_2OH$, $—R^3—(COOH)_u$, $—R^3—(SO_2OH)_u$, $—R^3—(NR^4R^5)_u$ oder eine aus einem α-, β- oder γ-Cyclodextrinmolekül durch Abspalten einer Hydroxylgruppe erhaltene Gruppe bedeuten,

oder ein, zwei oder drei $R^2$— Substituenten gemeinsam eine Gruppe der Formel $—R^3—NR^4—R^3—$ oder $(—R^3—)_3N$ bilden,

$R^{2'}$ die gleiche Bedeutung wie $R^2$ hat, aber nicht die aus den Cyclodextrinmolekülen erhaltenen Gruppen bedeutet,

$R^3$ eine (u+1)- wertige, aus einem Alkan oder einem araliphatischen Kohlenwasserstoff mit 1—10 C-Atomen erhältliche Gruppe bedeutet, deren der Polymerkette näher stehendes Endkohlenstoffatom gegebenenfalls durch eine Oxogruppe substituiert sein kann,

$R^4$ und $R^5$ unabhängig voneinander Wasserstoff, gebenenfalls durch Halogen substituiertes $C_{1-4}$-Alkyl, Aryl mit 6—10 C-Atomen oder eine durch deren Kombination erhältliche Aralkyl- oder Alkarylgruppe,

m und n unabhängig voneinander eine ganze Zahl von 1 bis 10,

r eine ganze Zahl von 0 bis 23,

p eine ganze Zahl von 1 bis 24,

s und t unabhängig voneinander eine ganze Zahl von 0 bis 7,

u eine ganze Zahl von 1 bis 5 bedeuten,

mit der Bedingung, daß

m, n, r, t und u auch in den Seitenketten innerhalb einer Einheit variieren können, und wenn

CD eine aus einem α-Cyclodextrin erhaltene Gruppe ist, $p+s \leq 18$ und $r+t \leq 17$ sind,

und wenn

CD eine aus einem β-Cyclodextrin erhaltene Gruppe ist, $p+s \leq 21$ und $r+t \leq 20$ sind,

und wenn

CD eine aus einem γ-Cyclodextrin erhaltene Gruppe ist, $p+s \leq 24$ und $r+t \leq 23$ sind,

deren CD-Gehalt 30—70% beträgt und die ein durchschnittliches MG von 2000—15000 aufweisen.

2. Verfahren zur Herstellung von wasserlöslichen, durch ionische Gruppen substituierte Cyclodextrinpolymere, die Struktureinheiten der allgemeinen Formel

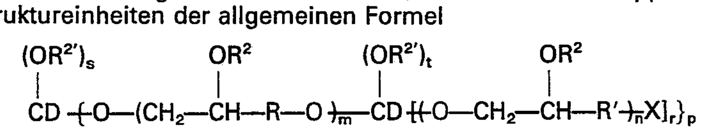

(I)

enthalten, worin

CD, R, R′, X, $R^2$, $R^{2'}$ m, n, p, r, s und t die oben angegebene Bedeutung haben,

deren CD-Gehalt 30—70% beträgt und die ein durchsnittliches MG von 2000—15000 aufweisen, dadurch gekennzeichnet, daß man

a) ein Mol α-, β- oder γ-Cyclodextrin mit 0,1 bis 7 Mol eines Halogenderivats der Formel:

$$R^{2''}—Hal$$

worin Hal Halogen ist und

$R^{2''}$ die gleiche Bedeutung wie $R^{2'}$ hat, aber nicht Wasserstoff, $—PO(OH)_2$ oder $—SO_2OH$ ist, oder mit 0,1 bis 7 Mol eines Sultons, das sich von einer Hydroxysulfonsäure der Formel

$$HO—R^3—SO_2OH$$

worin $R^3$ die oben angegebene Bedeutung hat, herleitet, in Gegenwart von 0,2 bis 14 Mol eines

Alkalimetall- oder Erdalkalimetallhydroxyds in 0,7 bis 1,0 l Wasser in an sich bekannter Weise umsetzt und die erhaltene Reaktionsmischung, die das durch ionische Gruppen substituierte Cyclodextrin enthält — bezogen auf 1 Mol in der Mischung vorliegendes Cylclodextrin — mit 5 bis 15 Mol Epichlorhydrin oder einem Diepoxyderivat der Formel

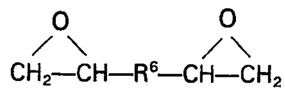

(II)

worin

$R^6$ eine direkte Bindung,

$$—CH_2—O—CH_2—, —CH_2—O—CH_2—CH_2—O—CH_2—$$

oder $—CH_2—O—(CH_2)_4—O—CH_2—$ bedeutet,

nach Zusatz von 5 bis 15 Mol Alkalimetall- oder Erdalkalimetallhydroxyd und 1,8 bis 2,5 l Wasser bei einer Temperatur im Bereich von 40 bis 80°C umsetzt, oder

b) ein Mol α-, β- oder γ-Cyclodextrin mit 0,1 bis 7 Mol eines Halogenderivates der Formel

$$R^{2''}—Hal$$

worin Hal und $R^{2''}$ die oben angegebene Bedeutung haben, oder mit einem Sulton, das sich von einer Hydroxysulfonsäure der formel

$$HO—R^3—SO_2OH$$

worin $R^3$ die oben angegebene Bedeutung hat, herleitet, oder mit einem primären oder secundären Amin oder einer Hydroxylverbindung der Formel

$$R^{2''}—OH$$

worin $R^{2''}$ die oben angegebene Bedeutung hat, und mit 5 bis 15 Mol Epichlorhydrin oder einem Diepoxyderivat der Formel II, worin $R^6$ die oben angegebene Bedeutung hat, in Gegenwart von 5 bis 20 Mol Alkalimetall- oder Erdalkalimetallhydroxid und 2,5 bis 3,5 l Wasser umsetzt, oder,

c) eine aus 1 Mol α-, β- oder γ-Cyclodextrin durch Umsetzung mit 5 bis 15 Mol Alkalimetall- oder Erdalkalimetallhydroxyd, 2,5 bis 3,5 l Wasser und 5 bis 15 Mol Epichlorhydrin oder einem Diepoxyderivat der allgemeinen Formel II, worin $R^6$ die oben angegebene Bedeutung hat, in an sich bekannter Weise erhaltene Cyclodextrin-polymerlösung — bezogen auf 1 Mol des darin enthaltenen Cyclodextrins — mit 0,1 bis 7 Mol eines Halogenderivats der Formel

$$R^{2''}—Hal$$

worin Hal und $R^{2''}$ die oben angegebene Bedeutung haben, oder mit einem Sulton, das sich von einer Hydroxysulfonsäure der Formel

$$HO—R^3—SO_2OH$$

worin $R^3$ die oben angegebene Bedeutung hat, herleitet, in Gegenwart von 0,2 bis 14 Mol Alkalimetall- oder Erdalkalimetallhydroxyd umsetzt, oder

d) zur Herstellung von Cyclodextrin-polymeren mit den Struktureinheiten der Formel I, worin $R^2$ und/oder $R^{2'}$ die oben angegebenen anorganischen oder organischen Acylgruppen bedeuten und die übrigen Substituenten die oben angegebene Bedeutung haben, ein Mol α-, β- oder γ-Cyclodextrin mit 5 bis 15 Mol Alkalimetall- oder Erdalkalimetallhydroxyd, 2,5 bis 3,5 l Wasser und mit 5 bis 15 Mol Epichlorhydrin oder einem Diepoxyderivat der Formel II, worin $R^6$ die oben angegebene Bedeutung hat, in an sich bekannter Weise umsetzt und das erhaltene Cyclodextrin-polymer unter Erhitzen mit dem entsprechenden anorganischen oder organischen Säureanhydrid in Anwesenheit eines organischen Lösungsmittels und/oder eines Saürebinders oder mit dem Salz der entsprechenden Säure in Abwesenheit eines organischen Lösungsmittels und/oder Säurebinders umsetzt und

aus der nach dem Verfahren a), b), c) oder d) erhaltenen Reaktionsmischung das durch ionische Gruppen substituierte Cyclodextrinpolymer nach Entfernung der niedermolekularen Nebenprodukte, der gelösten Salze und des Wassers in fester Form isoliert.

3. Verfahren nach Anspruch 2, dadurch gekennzeichnet, daß man als Cyclodextrinkomponente α-, β- oder γ-Cyclodextrin oder unsubstituiertes α-, β- oder γ-Cylodextrin-polymer verwendet.

4. Verfahren nach Anspruch 2 oder 3, dadurch gekennzeichnet, daß man zur Herstellung von Polymeren mit Struktureinheiten der Formel I, worin X und/oder $-O-R^2$ und/oder $-O-R^{2'}$

$$-O-CH_2-COOH \text{ bedeuten}$$

als Halogenderivat der Formel

$$R^{2''}-Hal$$

Chloressigsäure verwendet.

5. Verfahren nach Anspruch 2 oder 3, dadurch gekennzeichnet, daß man zur Herstellung von Polymeren mit Struktureinheiten der Formel I, worin X und/oder $-O-R^2$ und/oder $-O-R^{2'}$

$$-O-CH_2-CH_2-CH_2-SO_2OH \text{ bedeuten}$$

als Sulton, das sich von einer Hydroxysulfonsäure der Formel

$$HO-R^3-SO_2OH$$

herleitet, Propansulton verwendet.

6. Verfahren nach Anspruch 2b) oder 3, dadurch gekennzeichnet, daß man zur Herstellung von Polymeren mit Struktureinheiten der Formel I, worin X $-N(CH_3)_2$ bedeutet, als secondäres Amin Dimethylamin verwendet.

7. Verfahren nach Anspruch 2d) oder 3, dadurch gekennzeichnet, daß man zur Herstellung von Polymeren mit Struktureinheiten der Formel I, worin $R^2$ und/oder $R^{2'}$

$$-CO-(CH_2)_2-COOH \text{ oder } -CO-(CH_2)_4-COOH$$

bedeuten als organisches Säureanhydrid, Bernsteinsäureanhydrid oder Adipinsäureanhydrid verwendet.

8. Verfahren nach Anspruch 2d) oder 3, dadurch gekennzeichnet, daß man zur Herstellung von Polymeren mit Struktureinheiten der Formel I, worin $R^2$ und/oder $R^{2'}$

$$-SO_2OH \text{ bedeuten}$$

als organisches Säureanhydrid, Schwefeltrioxyd in Form seines Triäthylaminkomplexes verwendet.

9. Verfahren nach Anspruch 2d) oder 3, dadurch gekennzeichnet, daß man zur Herstellung von Polymeren mit Struktureinheiten der Formel I, worin $R^2$ und/oder $R^{2'}$ $-PO(OH)_2$ bedeuten, das unsubstituierte Cyclodextrin-polymer unter Erhitzen mit einer Mischung von Natriumdihydrogenphosphat und Dinatriumhydrogenphosphat umsetzt.

10. Verfahren nach einem der Ansprüche 2 bis 9, dadurch gekennzeichnet, daß man zur Vernetzung von Cyclodextrin Epichlorhydrin oder Äthylenglglykol-di-(epoxypropyl)-äther verwendet.

**Patentansprüche für den Vertragsstaat: AT**

1. Verfahren zur Herstellung von wasserlöslichen, durch ionische Gruppen substituierte Cyclodextrinpolymere, die Struktureinheiten der allgemeinen Formel

$$\overset{(OR^{2'})_s}{\overset{|}{CD}} \{ O-(CH_2-\overset{OR^2}{\overset{|}{CH}}-R-O )_{\overline{m}}-\overset{(OR^{2'})_t}{\overset{|}{CD}} [( O-CH_2-\overset{OR^2}{\overset{|}{CH}}-R' )_{\overline{n}} X]_r \}_p \qquad (I)$$

enthalten, worin

CD eine aus einem α-, β- oder γ-Cyclodextrinmolekül durch Abspaltung von p+s oder 1+t+r Hydroxylgruppen erhaltene Gruppe,

R und R' unabhängig voneinander

$$-CH_2-, -CHOH-CH_2-, -CH_2-O-(CH_2)_2-O-CH_2-CHOH-CH_2-, -CH_2-O-CH_2-CHOH-CH_2-$$

$$\text{oder } -CH_2-O-(CH_2)_4-O-CH_2-CHOH-CH_2-,$$

X eine sekundäre oder tertiäre Aminogruppe, $-OR^1$ oder $-OR^2$ bedeuten, worin

$R^1$ Wasserstoff oder -wenn r nicht 0 ist — eine aus einem α, β-, oder γ-Cyclodextrinmolekül durch Abspalten einer Hydroxylgruppe erhaltene Gruppe,

$R^2$, das gleiche oder verschiedene Bedeutungen haben kann, Wasserstoff, $-PO(OH)_2-$, $-SO_2OH$, $-R^3-(COOH)_u$, $-R^3-(SO_2OH)_u$, $-R^3-(NR^4R^5)_u$ oder eine aus einem α-, β- oder γ-Cyclodextrinmolekül durch Abspalten einer Hydroxylgruppe erhaltene Gruppe bedeuten,

oder ein, zwei oder drei $R^2$— Substituenten gemeinsam eine Gruppe der Formel —$R^3$—$NR^4$—$R^3$— oder $(—R^3—)_3N$ bilden,

$R^{2'}$ die gleiche Bedeutung wie $R^2$ hat, aber nicht die aus den Cyclodextrinmolekülen erhaltenen Gruppen bedeutet,

$R^3$ eine (u+1)- wertige, aus einem Alkan oder einem araliphatischen Kohlenwasserstoff mit 1—10 C-Atomen erhältliche Gruppe bedeutet, deren der Polymerkette näher stehendes Endkohlenstoffatom gegebenenfalls durch eine Oxogruppe substituiert sein kann,

$R^4$ und $R^5$ unabhängig voneinander Wasserstoff, gebenenfalls durch Halogen substituiertes $C_{1-4}$-Alkyl, Aryl mit 6—10 Atomen oder eine durch deren Kombination erhältliche Aralkyl- oder Alkarylgruppe,

m und n unabhängig voneinander eine ganze Zahl von 1 bis 10,

r eine ganze Zahl von 0 bis 23,

p eine ganze Zahl von 1 bis 24,

s und t unabhängig voneinander eine ganze Zahl von 0 bis 7,

u eine ganze Zahl von 1 bis 5 bedeuten,

mit der Bedingung, daß

m, n, r, t und u auch in den Seitenketten innerhalb einer Einheit variieren können, und wenn

CD eine aus einem α-Cyclodextrin erhaltene Gruppe ist, $p+s \leq 18$ und $r+t \leq 17$ sind,

und wenn

CD ein ause einem β-Cyclodextrin erhaltene Gruppe ist, $p+s \leq 21$ und $r+t \leq 20$ sind,

und wenn

CD ein aus einem γ-Cyclodextrin erhaltene Gruppe ist, $p+s \leq 24$ und $r+t \leq 23$ sind,

deren CD-Gehalt 30—70% beträgt und die ein durchschnittliches MG von 2000—15000 aufweisen, dadurch gekennzeichnet, daß man

a) ein Mol α-, β- oder γ-Cyclodextrin mit 0,1 bis 7 Mol eines Halogenderivats der Formel:

$$R^{2''}—Hal$$

worin Hal Halogen ist und

$R^{2''}$ die gleiche Bedeutung wie $R^{2'}$ hat, aber nicht Wasserstoff, —$PO(OH)_2$ oder —$SO_2OH$ ist, oder mit 0,1 bis 7 Mol eines Sultons, das sich von einer Hydroxysulfonsäure der Formel

$$HO—R^3—SO_2OH$$

worin $R^3$ die oben angegebene Bedeutung hat, herleitet, in Gegenwart von 0,2 bis 14 Mol eines Alkalimetall- oder Erdalkalimetallhydroxyds in 0,7 bis 1,0 l Wasser in an sich bekannter Weise umsetzt und die erhaltene Reaktionsmischung, die das durch ionische Gruppen substituierte Cyclodextrin enthält — bezogen auf 1 Mol in der Mischung vorliegendes Cylclodextrin — mit 5 bis 15 Mol Epichlorhydrin oder einem Diepoxyderivat der Formel

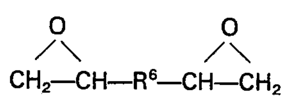

(II)

worin

$R^6$ eine direkte Bindung,

$$—CH_2—O—CH_2—, —CH_2—O—CH_2—CH_2—O—CH_2—$$

oder —$CH_2$—O—$(CH_2)_4$—O—$CH_2$— bedeutet,

nach Zusatz von 5 bis 15 Mol Alkalimetall- oder Erdalkalimetallhydroxyd und 1,8 bis 2,5 l Wasser bei einer Temperatur im Bereich von 40 bis 80°C umsetzt, oder

b) ein Mol α-, β- oder γ-Cyclodextrin mit 0,1 bis 7 Mol eines Halogenderivates der Formel

$$R^{2''}—Hal$$

worin Hal und $R^{2''}$ die oben angegebene Bedeutung haben, oder mit einem Sulton, das sich von einer Hydroxysulfonsäure der Formel

$$HO—R^3—SO_2OH$$

worin $R^3$ die oben angegebene Bedeutung hat, herleitet, oder mit einem primären oder secundären Amin oder einer Hydroxylverbindung der Formel

$$R^{2''}—OH$$

worin $R^{2''}$ die oben angegebene Bedeutung hat, und mit 5 bis 15 Mol Epichlorhydrin oder einem Diepoxyderivat der Formel II, worin $R^6$ die oben angegebene Bedeutung hat, in Gegenwart von 5 bis 20 Mol Alkalimetall- oder Erdalkalimetallhydroxyd und 2,5 bis 3,5 l Wasser umsetzt, oder

c) eine aus 1 Mol α-, β- oder γ-Cyclodextrin durch Umsetzung mit 5 bis 15 Mol Alkalimetall- oder Erdalkalimetallhydroxyd, 2,5 bis 3,5 l Wasser und 5 bis 15 Mol Epichlorhydrin oder einem Diepoxyderivat der allgemeinen Formel II, worin $R^6$ die oben angegebene Bedeutung hat, in an sich bekannter Weise erhaltene Cyclodextrin-polymerlösung — bezogen auf 1 Mol des darin enthaltenen Cyclodextrins — mit 0,1 bis 7 Mol eines Halogenderivats der Formel

$$R^{2''}—Hal$$

worin Hal und $R^{2''}$ die oben angegebene Bedeutung haben, oder mit einem Sulton, das sich von einer Hydroxysulfonsäure der Formel

$$HO—R^3—SO_2OH$$

worin $R^3$ die oben angegebene Bedeutung hat, herleitet, in Gegenwart von 0,2 bis 14 Mol Alkalimetall- oder Erdalkalimetallhydroxyd umsetzt, oder

d) zur Herstellung von Cyclodextrin-polymeren mit den Struktureinheiten der Formel I, worin $R^2$ und/oder $R^{2'}$ die oben angegebenen anorganischen oder organischen Acylgruppen bedeuten und die übrigen Substituenten die oben angegebene Bedeutung haben, ein Mol α-, β- oder γ-Cyclodextrin mit 5 bis 15 Mol Alkalimetall- oder Erdalkalimetallhydroxyd, 2,5 bis 3,5 l Wasser und mit 5 bis 15 Mol Epichlorhydrin oder einem Diepoxyderivat der Formel II, worin $R^6$ die oben angegebene Bedeutung hat, in an sich bekannter Weise umsetzt und das erhaltene Cyclodextrin-polymer unter Erhitzen mit dem entsprechenden anorganischen oder organischen Säureanhydrid in Anwesenheit eines organischen Lösungsmittels und/oder eines Saürebinders oder mit dem Salz der entsprechenden Säure in Abwesenheit eines organischen Lösungsmittels und/oder Säurebinders umsetzt und

aus der nach dem Verfahren a), b), c) oder d) erhaltenen Reaktionsmischung das durch ionische Gruppen substituierte Cyclodextrinpolymer nach Entfernung der niedermolekularen Nebenprodukte, der gelösten Salze und des Wassers in fester Form isoliert.

2. Verfahren nach Anspruch 1, dadurch gekennzeichnet, daß man als Cyclodextrinkomponente α-, β- oder γ-Cyclodextrin oder unsubstituiertes α-, β- oder γ-Cylodextrin-polymer verwendet.

3. Verfahren nach Anspruch 1 oder 2, dadurch gekennzeichnet, daß man zur Herstellung von Polymeren mit Struktureinheiten der Formel I, worin X und/oder —O—$R^2$ und/oder —O—$R^{2'}$

$$—O—CH_2—COOH \text{ bedeuten}$$

als Halogenderivat der Formel

$$R^{2''}—Hal$$

Chloressigsäure verwendet.

4. Verfahren nach Anspruch 1 oder 2, dadurch gekennzeichnet, daß man zur Herstellung von Polymeren mit Struktureinheiten der Formel I, worin X und/oder —O—$R^2$ und/oder —O—$R^{2'}$

$$—O—CH_2—CH_2—CH_2—SO_2OH \text{ bedeuten}$$

als Sulton, das sich von einer Hydroxysulfonsäure Formel

$$HO—R^3—SO_2OH$$

herleitet, Propansulton verwendet.

5. Verfahren nach Anspruch 1b) oder 2, dadurch gekennzeichnet, daß man zur Herstellung von Polymeren mit Struktureinheiten der Formel I, worin X —$N(CH_3)_2$ bedeutet, als secundäres Amin Dimethylamin verwendet.

6. Verfahren nach Anspruch 1d) oder 2, dadurch gekennzeichnet, daß man zur Herstellung von Polymeren mit Struktureinheiten der Formel I, worin $R^2$ und/oder $R^{2'}$

$$—CO—(CH_2)_2—COOH \text{ oder } —CO—(CH_2)_4—COOH$$

bedeuten als organisches Säureanhydrid, Bernsteinsäureanhydrid oder Adipinsäureanhydrid verwendet.

7. Verfahren nach Anspruch 1d) oder 2, dadurch gekennzeichnet, daß man zur Herstellung von Polymeren mit Struktureinheiten der Formel I, worin $R^2$ und/oder $R^{2'}$

$$—SO_2OH \text{ bedeuten}$$

als anorganisches Säureanhydrid, Schwefeltrioxyd in Form seines Triäthylaminkomplexes verwendet.

8. Verfahren nach Anspruch 1d) oder 2, dadurch gekennzeichnet, daß man zur Herstellung von Polymeren mit Struktureinheiten der Formel I, worin $R^2$ und/oder $R^{2'}$ $-PO(OH)_2$ bedeuten, das unsubstituierte Cyclodextrin-polymer unter Erhitzen mit einer Mischung von Natriumdihydrogenphosphat und Dinatriumhydrogenphosphat umesetzt.

9. Verfahren nach einem der Ansprüche 1 bis 8, dadurch gekennzeichnet, daß man zur Vernetzung von Cyclodextrin Epichlorhydrin oder Äthylenglglykol-di-(epoxypropyl)-äther verwendet.

**Revendications pour les Etats contractants: CH DE FR GB LI**

1. Polymères de cyclodextrine solubles dans l'eau substitués par des groupes ioniques, qui contiennent des unités structurales de formule générale

$$\overset{(OR^{2'})_s}{\overset{|}{CD}}\left\{O-\left(CH_2-\overset{OR^2}{\overset{|}{C}H}-R-O\right)_m-\overset{(OR^{2'})_t}{\overset{|}{CD}}\left[\left(O-CH_2-\overset{OR^2}{\overset{|}{C}H}-R'\right)_n X\right]_r\right\}_p \qquad (I)$$

où,

CD représente un groupe obtenu à partir d'une molécule d'α-, β- ou γ-cyclodextrines par séparation de p+s ou l+t+r groupes hydroxyles,

R et R' représentent indépendamment l'un de l'autre

$$-CH_2-,\ -CHOH-CH_2-,\ -CH_2-O-(CH_2)_2-O-CH_2-CHOH-CH_2-,$$

$$-CH_2-O-CH_2-O-CHOH-CH_2-\ \text{ou}\ -CH_2-O-(CH_2)_4-O-CH_2-CHOH-CH_2-,$$

X représente un groupe amino secondaire ou tertiaire, $-OR^1$ ou $-OR^2$,

ou

$R^1$ représente un hydrogène ou -lorsque r ne vaut pas O — un groupe obtenu à partir d'une molécule d'α, β- ou γ-cyclodextrine par séparation d'un groupe hydroxyle,

$R^2$ qui peut avoir des significations identiques ou différentes, représente un hydrogène, $-PO(OH)_2-$, $-SO_2OH$, $-R^3-(COOH)_u$, $-R^3-(SO_2OH)_u$, $-R^3-(NR^4R^5)_u$ un groupe obtenu à partir d'une molécule d'α, β- ou γ-cyclodextrine par séparation d'un groupe hydroxyle,

ou 1, 2 ou 3 substituants $R^2$ ensemble peuvent former un groupe de formule $-R^3-NR^4-R^3-$ ou $(-R^3-)_3N$.

$R^{2'}$ a la même signification que $R^2$, mais ne représentente pas les groupes obtenus à partir des molécules de cyclodextrine,

$R^3$ représente un groupe (u+l)-valent que l'on peut obtenir à partir d'un alcane ou d'un hydrocarbone araliphatique en $C_{1-10}$, dont l'atome de carbone final le plus proche de la chaîne de polymère peut être éventuellement substitué par un groupe oxo,

$R^4$ et $R^5$ représentent indépendamment l'un de l'aure un hydrogène, un alcoyle en $C_{1-4}$ éventuellement substitué par un halogène, un aryle en $C_{6-10}$ ou un groupe aralcoyle ou alcaryle que l'on peut obtenir par leur combinaison,

m et n représentent indépendamment l'un de l'autre un nombre entier allant de 1 à 10,

r représente un nombre entier allant de 0 à 23,

p représente un nombre entier allant de 1 à 24,

s et t représentent indépendamment l'un de l'autre un nombre entier allant de 0 à 7,

u représente un nombre entier allant de 1 à 5, avec cette précision que

m, n, r, t et u peuvent également varier dans les chaînes latérales à l'intérieur d'une unité, et lorsque,

CD est un groupe obtenu à partir d'une α-cyclodextrine, $p+s \leq 18$ et $r+t \leq 17$,

et lorsque

CD est un groupe obtenu à partir d'une β-cyclodextrine, $p+s \leq 21$ et $r+t \leq 20$,

et lorsque

CD est un groupe obtenu à partir d'une γ-cyclodextrine, $p+s \leq 24$ et $r+t \leq 23$,

dont la teneur en CD s'élève à 30—70% et qui présentent un PM moyen de 2000—15000.

2. Procédé de préparation de polymères de cyclodextrine solubles dans l'eau substitués par des groupes ioniques qui contiennent des unités structurales de formule générale

$$\overset{(OR^{2'})_s}{\overset{|}{CD}}\left\{O-\left(CH_2-\overset{OR^2}{\overset{|}{C}H}-R-O\right)_m-\overset{(OR^{2'})_t}{\overset{|}{CD}}\left[\left(O-CH_2-\overset{OR^2}{\overset{|}{C}H}-R'\right)_n X\right]_r\right\}_p \qquad (I)$$

ou CD, R, R', X, $R^2$, $R^{2'}$, m, n, p, r, s et t ont la signification donnée ci-dessus, dont la teneur en CD s'élève à 30—70% et qui présentent un PM moyen de 2000—15 000, caractérisé en ce que

a) on fait réagir de façon connue une mole d'α-, β- ou γ-cyclodextrine avec de 0,1 à 7 moles d'un dérivé d'halogène de formule:

$$R^{2''}—Hal$$

où Hal est un halogène et

$R^{2''}$ a la même signification que $R^{2'}$, mais ne représente pas un hydrogène, $—PO—(OH)_2$ ou $—SO_2OH$, ou avec de 0,1 à 7 moles d'une sultone, qui dérive d'une acide hydroxysulfonique de formule

$$HO—R^3—SO_2OH$$

où $R^3$ a la signification donnée ci-dessus, en présence de 0,2 à 14 moles d'un hydroxyde de métal alcalin ou de métal alcalino-terreux dans 0,7 à 1,0 litre d'eau de façon connue et on fait réagir le mélange réactionnel obtenu qui contient la cyclodextrine substituée par des groupes ioniques — par rapport à une mole de cyclodextrine présente dans le mélange — avec de 5 à 15 moles d'épichlorhydrine ou d'un dérivé diépoxy de formule

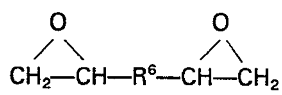

(II)

où

$R^6$ représente une liaison directe,

$$—CH_2—O—CH_2—,\ —CH_2—O—CH_2—CH_2—O—CH_2—$$

$$\text{ou}\ —CH_2—O—(CH_2)_4—O—CH_2—$$

après addition de 5 à 15 moles d'hydroxyde de métal alcalin ou de métal alcalino-terreux et de 1,8 à 2,5 litres d'eau à une température située dans un intervalle de 40 à 80°C ou

b) on fait réagir une mole d'α-, β- ou γ-cyclodextrine avec de 0,1 à 7 moles d'un dérivé d'halogène de formule

$$R^{2''}—Hal$$

où Hal et $R^{2''}$ ont la signification donnée ci-dessus ou avec une sultone qui dérive d'un acide hydroxysulfonique de formule

$$HO—R^3—SO_2OH$$

où $R^3$ a la signification donnée ci-dessus, ou avec une amine primaire ou secondaire ou un composé hydroxyle de formule

$$R^{2''}—OH$$

où $R^{2''}$ a la signification donnée ci-dessus, et avec de 5 à 15 moles d'épichlorhydrine ou un dérivé diépoxy de formule II, où $R^6$ a la signification donnée ci-dessus, en présence de 5 à 20 moles d'hydroxyde de métal alcalin ou alcalino-terreux et de 2,5 à 3,5 litres d'eau, ou

c) on fait réagir une solution de polymère de cyclodextrine obtenue de façon connue à partir d'une mole d'α-, β- ou γ-cyclodextrine par réaction avec de 5 à 15 moles d'hydroxyde de métal alcalin ou de métal alcalino-terreux, 2,5 à 3,5 liters d'eau et 5 à 15 moles d'épichlorhydrine ou d'un dérivé diépoxy de formule générale II,

où $R^6$ a la signification donnée ci-dessus, par rapport à une mole de la cyclodextrine qui y est contenue avec de 0,1 à 7 moles d'un dérivé d'halogène de formule

$$R^{2''}—Hal$$

où Hal et $R^{2''}$ ont la signification donnée ci-dessus, ou avec une sultone qui dérive d'un acide hydroxysulfonique de formule

$$HO—R^3—SO_2OH$$

où $R^3$ a la signification donnée ci-dessus, en présence de 0,2 à 14 moles d'hydroxyde de métal alcalin ou alcalino-terreux, ou

d) pour préparer des polymères de cyclodextrine ayant les unités structurales de formule I,

où $R^2$ et/ou $R^{2'}$ désignent les groupes acyle inorganiques ou organiques indiqués ci-dessus et les autres

substituants ont la signification donnée ci-dessus, on fait réagir de façon connue une mole d'α-, β- ou γ-cyclodextrine avec de 5 à 15 moles d'hydroxyde de métal alcalin ou de métal alcalino-terreux, 2,5 à 3,5 liters d'eau et avec 5 à 15 moles d'épichlorhydrine ou d'un dérivé diépoxy de formule II,

où $R^6$ a la signification donnée ci-dessus, et on fait réagir le polymère de cyclodextrine obtenu en chauffant avec l'anhydride d'acide inorganique ou organique correspondant en présence d'un solvant organique et/ou d'un liant d'acide ou avec le sel de l'acide correspondant en l'absence d'un solvant organique et/ou d'un liant d'acide et à partir du mélange réactionnel obtenu selon la procédé a), b), c) ou d) on isole forme solide le polymère de cyclodextrine substitué par des groupes ioniques après avoir enlevé les sous-produits à faible poids moléculaire, les sels dissous et l'eau.

3. Procédé selon la revendication 2, caractérisé en ce qu'on utilise comme composant cyclodextrine l'α-, la β- ou la γ-cyclodextrine ou un polymère d'α-, β- ou γ-cyclodextrine non substitué.

4. Procédé selon la revendication 2 ou 3, caractérisé en ce que pour préparer des polymères ayant des unités structurales de formule I, où X et/ou $—O—R^2$ et/ou $—O—R^{2'}$ représentent

$$—O—CH_2—COOH$$

on utilise comme dérivé halogéné de formule

$$R^{2''}—Hal$$

l'acide chloroacétique.

5. Procédé selon la revendication 2 ou 3, caractérisé en ce que pour préparer des polymères ayant des unités structurales de formule I, où X et/ou $—O—R^2$ et/ou $—O—R^{2'}$ représentent

$$—O—CH_2—CH_2—CH_2—SO_2OH$$

comme sultone qui dérive d'un acide hydroxysulfonique de formule

$$HO—R^3—SO_2OH$$

on utilise la propanesultone.

6. Procédé selon la revendication 2b) ou 3, caractérisé en ce que pour préparer des polymères ayant des unités structurales de formule I, où X représente $—N(CH_3)_2$, on utilise comme amine secondaire la diéthylamine.

7. Procédé selon la revendication 2d) ou 3, caractérisé en ce que pour préparer des polymères ayant des unités structurales de formule I, où $R^2$ et/ou $R^{2'}$ représentent

$$—CO—(CH_2)_2—COOH \text{ ou } —CO—(CH_2)_4—COOH$$

on utilise comme anhydride d'acide l'anhydride de l'acide succinique ou l'anhydride de l'acide adipique.

8. Procédé selon la revendication 2d) ou 3, caractérisé en ce que pour préparer des polymères ayant des unités structurales de formule I, où $R^2$ et/ou $R^{2'}$ représentent $—SO_2OH$, on utilise comme anhydride d'acide inorganique l'anhydride sulfurique sous la forme de son complexe de triéthylamine.

9. Procédé selon la revendication 2d) ou 3, caractérisé en ce que pour préparer des polymères ayant des unités structurales de formule I, où $R^2$ et/ou $R^{2'}$ représentent $—PO(OH)_2$, on fait réagir le polymère de cyclodextrine non substitué en chauffant avec un mélange de phosphate diacide de sodium et de phosphate acide disodique.

10. Procédé selon l'une des revendications 2 à 9, caractérisé en ce que pour réticuler la cyclodextrine on utilise l'épichlorhydrine ou le di-(époxypropyl)-éther d'éthylène glycol.

**Revendications pour l'Etat contractant: AT**

1. Procédé de préparation de polymères de cyclodextrine solubles dans l'eau, substitués par des groupes ioniques, qui présentent des unités structurales de formule générale

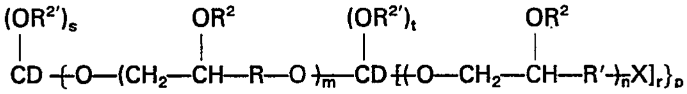

(I)

où,

CD représente un groupe obtenu à partir d'une molécule d'α-, β- ou γ-cyclodextrines par séparation de p+s ou l+t+r groupes hydroxyles,

R et R' représentent indépendamment l'un de l'autre

$$—CH_2—, —CHOH—CH_2—, —CH_2—O—(CH_2)_2—O—CH_2—CHOH—CH_2—,$$

$$—CH_2—O—CH_2—O—CHOH—CH_2— \text{ ou } —CH_2—O—(CH_2)_4—O—CH_2—CHOH—CH_2—,$$

X représente un groupe amino secondaire ou tertiaire, $—OR^1$ ou $—OR^2$,

ou

$R^1$ représente un hydrogène ou -lorsque r ne vaut pas O — un groupe obtenu à partir d'une molécule d'α, β- ou γ-cyclodextrine par séparation d'un groupe hydroxyle,

$R^2$ qui peut avoir des significations identiques ou différentes, représente un hydrogène, $—PO(OH)_2—$, $—SO_2OH$, $—R^3—(COOH)_u$, $—R^3—(SO_2OH)_u$, $—R^3—(NR^4R^5)_u$ ou un groupe obtenu à partir d'une molécule d'α, β- ou γ-cyclodextrine par séparation d'un groupe hydroxyle,

ou 1, 2 ou 3 substituants $R^2$ ensemble peuvent former un groupe de formule $—R^3—NR^4—R^3—$ ou $(—R^3—)_3N$.

$R^{2'}$ a la même signification que $R^2$, mais ne représente pas les groupes obtenus à partir des molécules de cyclodextrine,

$R^3$ représente un groupe (u+l)-valent que l'on peut obtenir à partir d'un alcane ou d'un hydrocarbone araliphatique en $C_{1-10}$, dont l'atome de carbone final le plus proche de la chaîne de polymère peut être éventuellement substitué par un groupe oxo,

$R^4$ et $R^5$ représentent indépendamment l'un de l'aure un hydrogène, un alcoyle en $C_{1-4}$ éventuellement substitué par un halogène, un aryle en $C_{6-10}$ ou un groupe aralcoyle ou alcaryle que l'on peut obtenir par leur combinaison,

m et n représentent indépendamment l'un de l'autre un nombre entier allant de 1 à 10,

r représente un nombre entier allant de 0 à 23,

p représente un nombre entier allant de 1 à 24,

s et t représentent indépendamment l'un de l'autre un nombre entier allant de 0 à 7,

u représente un nombre entier allant de 1 à 5, avec cette précision que

m, n, r, t et u peuvent également varier dans les chaînes latérales à l'intérieur d'une unité, et lorsque,

CD est un groupe obtenu à partir d'une α-cyclodextrine, $p+s \leq 18$ et $r+t \leq 17$,

et lorsque

CD est un groupe obtenu à partir d'une β-cyclodextrine, $p+s \leq 21$ et $r+t \leq 20$,

et lorsque

CD est un groupe obtenu à partir d'une γ-cyclodextrine, $p+s \leq 24$ et $r+t \leq 23$,

dont la teneur en CD s'élève à 30—70% et qui présentent un PM moyen de 2000—15000.

caractérisé en ce que

a) on fait réagir de façon connue une mole d'α-, β- ou γ-cyclodextrine avec de 0,1 à 7 moles d'un dérivé d'halogène de formule:

$$R^{2''}—Hal$$

où Hal est un halogène et

$R^{2''}$ a la même signification que $R^{2'}$, mais ne représente pas un hydrogène, $—PO—(OH)_2$ ou $—SO_2OH$, ou avec de 0,1 à 7 moles d'une sultone, qui dérive d'une acide hydroxysulfonique de formule

$$HO—R^3—SO_2OH$$

où $R^3$ a la signification donnée ci-dessus, en présence de 0,2 à 14 moles d'un hydroxyde de métal alcalin ou de métal alcalino-terreux dans 0,7 à 1,0 litre d'eau de façon connue et on fait réagir le mélange réactionnel obtenu qui contient la cyclodextrine substituée par des groupes ioniques — par rapport à une mole de cyclodextrine présente dans le mélange — avec de 5 à 15 moles d'épichlorhydrine ou d'un dérivé diépoxy de formule

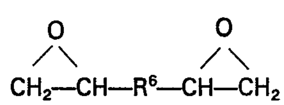

(II)

où

$R^6$ représente une liaison directe,

$$—CH_2—O—CH_2—, —CH_2—O—CH_2—CH_2—O—CH_2—$$

$$\text{ou } —CH_2—O—(CH_2)_4—O—CH_2—$$

après addition de 5 à 15 moles d'hydroxyde de métal alcalin ou de métal alcalino-terreux et de 1,8 à 2,5 litres d'eau à une température située dans un intervalle de 40 à 80°C ou

b) on fait réagir une mole d'α-, β- ou γ-cyclodextrine avec de 0,1 à 7 moles d'un dérivé d'halogène de formule

$$R^{2''}—Hal$$

où Hal et $R^{2''}$ ont la signification donnée ci-dessus ou avec une sultone qui dérive d'un acide hydroxysulfonique de formule

$$HO—R^3—SO_2OH$$

où $R^3$ a la signification donnée ci-dessus, ou avec une amine primaire ou secondaire ou un composé hydroxyle de formule

$$R^{2''}—OH$$

où $R^{2''}$ a la signification donnée ci-dessus, et avec de 5 à 15 moles d'épichlorhydrine ou un dérivé diépoxy de formule II, où $R^6$ a la signification donnée ci-dessus, en présence de 5 à 20 moles d'hydroxyde de métal alcalin ou alcalino-terreux et de 2,5 à 3,5 litres d'eau, ou

c) on fait réagir une solution de polymère de cyclodextrine obtenue de façon connue à partir d'une mole d'α-, β- ou γ-cyclodextrine par réaction avec de 5 à 15 moles d'hydroxyde de métal alcalin ou de métal alcalino-terreux, 2,5 à 3,5 liters d'eau et 5 à 15 moles d'épichlorhydrine ou d'un dérivé diépoxy de formule générale II,

où $R^6$ a la signification donnée ci-dessus, par rapport à une mole de la cyclodextrine qui y est contenue avec de 0,1 à 7 moles d'un dérivé d'halogène de formule

$$R^{2''}—Hal$$

où Hal et $R^{2''}$ ont la signification donnée ci-dessus, ou avec une sultone qui dérive d'un acide hydroxysulfonique de formule

$$HO—R^3—SO_2OH$$

où $R^3$ a la signification donnée ci-dessus, en présence de 0,2 à 14 moles d'hydroxyde de métal alcalin ou alcalino-terreux, ou

d) pour préparer des polymères de cyclodextrine ayant les unités structurales de formule I,

où $R^2$ et/ou $R^{2'}$ désignent les groupes acyle inorganiques ou organiques indiqués ci-dessus et les autres substituants ont la signification donnée ci-dessus, on fait réagir de façon connue une mole d'α-, β- ou γ-cyclodextrine avec de 5 à 15 moles d'hydroxyde de métal alcalin ou de métal alcalino-terreux, 2,5 à 3,5 liters d'eau et avec 5 à 15 moles d'épichlorhydrine ou d'un dérivé diépoxy de formule II,

où $R^6$ a la signification donnée ci-dessus, et on fait réagir le polymère de cyclodextrine obtenu en chauffant avec l'anhydride d'acide inorganique ou organique correspondant en présence d'un solvant organique et/ou d'un liant d'acide ou avec le sel de l'acide correspondant en l'absence d'un solvant organique et/ou d'un liant d'acide et à partir du mélange réactionnel obtenu selon la procédé a), b), c) ou d) on isole sous forme solide le polymère de cyclodextrine substitué par des groupes ioniques après avoir enlevé les sous-produits à faible poids moléculaire, les sels dissous et l'eau.

2. Procédé selon la revendication 1, caractérisé en ce qu'on utilise comme composant cyclodextrine l'α-, la β- ou la γ-cyclodextrine ou un polymère d'α-, β- ou γ-cyclodextrine non substitué.

3. Procédé selon la revendication 1 ou 2, caractérisé en ce que pour préparer des polymères ayant des unités structurales de formule I, où X et/ou $—O—R^2$ et/ou $—O—R^{2'}$ représentent

$$—O—CH_2—COOH$$

on utilise comme dérivé halogéné de formule

$$R^{2''}—Hal$$

l'acide chloroacétique.

4. Procédé selon la revendication 1 ou 2, caractérisé en ce que pour préparer des polymères ayant des unités structurales de formule I, où X et/ou $—O—R^2$ et/ou $—O—R^{2'}$ représentent

$$—O—CH_2—CH_2—CH_2—SO_2OH$$

comme sultone qui dérive d'un acide hydroxysulfonique de formule

$$HO—R^3—SO_2OH$$

on utilise la propanesultone.

5. Procédé selon la revendication 1b) ou 2, caractérisé en ce que pour préparer des polymères ayant des unités structurales de formule I, où X représente $—N(CH_3)_2$, on utilise comme amine secondaire la diéthylamine.

6. Procédé selon la revendication 1d) ou 2, caractérisé en ce que pour préparer des polymères ayant des unités structurales de formule I, où $R^2$ et/ou $R^{2'}$ représentent

$$—CO—(CH_2)_2—COOH \text{ ou } —CO—(CH_2)_4—COOH$$

on utilise comme anhydride d'acide l'anhydride de l'acide succinique ou l'anhydride de l'acide adipique.

7. Procédé selon la revendication 1d) ou 2, caractérisé en ce que pour préparer des polymères ayant des unités structurales de formule I, où $R^2$ et/ou $R^{2'}$ représentent $—SO_2OH$, on utilise comme anhydride d'acide inorganique l'anhydride sulfurique sous la forme de son complex de triéthylamine.

8. Procédé selon la revendication 1d) ou 2, caractérisé en ce que pour préparer des polymères ayant des unités structurales de formule I, où $R^2$ et/ou $R^{2'}$ représentent $—PO(OH)_2$, on fait réagir le polymère de cyclodextrine non substitué en chauffant avec un mélange de phosphate diacide de sodium et de phosphate acide disodique.

9. Procédé selon l'une des revendications 1 à 8, caractérisé en ce que pour réticuler la cyclodextrine on utilise l'épichlorhydrine ou le di-(époxypropyl)-éther d'éthylène glycol.

**Claims for the Contracting States: CH DE FR GB LI**

1. Water-soluble cyclodextrin polymers which are substituted by ionic groups and contain structural units of the general formula

$$\begin{array}{l} (OR^{2'})_s \qquad\quad OR^2 \qquad\quad (OR^{2'})_t \qquad\quad OR^2 \\ | \qquad\qquad\quad | \qquad\qquad\quad | \qquad\qquad\quad | \\ CD \{O—(CH_2—CH—R—O)_m—CD[(O—CH_2—CH—R')_n X]_r\}_p \end{array} \qquad (I)$$

wherein

CD denotes a group obtained from an α-, β- or γ-cyclodextrin molecule by splitting off p+s or 1+t+r hydroxyl groups, R and R' independently of one another denote

$—CH_2—$, $—CHOH—CH_2—$, $—CH_2—O—(CH_2)_2—O—CH_2—CHOH—CH_2—$, $—CH_2—O—CH_2—CHOH—CH_2—$ or

$$—CH_2—O—(CH_2)_4—O—CH_2—CHOH—CH_2—,$$

X denotes a secondary or tertiary amino group, $—OR^1$ or $—OR^2$, wherein

$R^1$ denotes hydrogen or — if r is not O — a group obtained from α-, β- or γ-cyclodextrin molecule by splitting off a hydroxyl group,

$R^2$, which can have identical or different meanings, denotes hydrogen, $—PO(OH)_2—$, $—SO_2OH$, $—R^3—(COOH)_u$, $—R^3—(SO_2OH)_u$, $—R^3—(NR^4R^5)_u$ or a group obtained from an α-, β- or γ-cyclodextrin molecule by splitting off a hydroxyl group,

or one, two or three $R^2$ substituents together form a group of the formula $—R^3—NR^4—R^3—$ or $(—R^3—)_3N$,

$R^{2'}$ has the same meaning as $R^2$, but does not denote the groups obtained from the cyclodextrin molecules,

$R^3$ denotes a (u+l)-valent group obtainable from an alkane or an araliphatic hydrocarbon having 1—10 C atoms, in which the terminal carbon atom closer to the polymer chain can optionally be substituted by an oxo group,

$R^4$ and $R^5$ independently of one another denote hydrogen, optionally halogen-substituted $C_{1-4}$-alkyl, aryl having 6—10 C atoms or an aralkyl or alkaryl group obtainable by combination thereof,

m and n independently of one another denote an integer of from 1 to 10,

r denotes an integer from 0 to 23,

p denotes an integer from 1 to 24,

s and t independently of one another denotes an integer from 0 to 7 and

u denotes an integer from 1 to 5, with the condition that

m, n, r, t and u, including in the side chains, can vary within a unit,

and if

CD is a group obtained from an α-cyclodextrin, $p+s \leq 18$ and $r+t \leq 17$,

and if

CD is a group obtained from an β-cyclodextrin, $p+s \leq 21$ and $r+t \leq 20$,

and if

CD is a group obtained from an γ-cyclodextrin, $p+s \leq 24$ and $r+t \leq 23$,

the CD content of which is 30—70% and which have an average MW of 2,000—15,000.

2. Process for the preparation of water-insoluble cyclodextrin polymers which are substituted by ionic groups and contain structural units of the general formula

$$\begin{array}{l} (OR^{2'})_s \qquad\quad OR^2 \qquad\quad (OR^{2'})_t \qquad\quad OR^2 \\ | \qquad\qquad\quad | \qquad\qquad\quad | \qquad\qquad\quad | \\ CD \{O—(CH_2—CH—R—O)_m—CD[(O—CH_2—CH—R')_n X]_r\}_p \end{array} \qquad (I)$$

wherein CD, R, $R^1$, X, $R^2$, $R^{2'}$, m, n, p, r, s, and t have the abovementioned meaning, the CD content of which is 30—70% and which have an average MW of 2,000—15,000, characterized in that

a) one mol α-, β- or γ-cyclodextrin is reacted with 0.1 mol to 7 mol of a halogen derivative of the formula:

$$R^{2''}—Hal$$

wherein Hal is halogen and $R^{2''}$ has the same meaning as $R^{2'}$, but is not hydrogen, $—PO(OH)_2$ or $—SO_2OH$, or with 0.1 to 7 mol of a sultone derived from a hydroxysulphonic acid of the formula

$$HO—R^3—SO_2OH$$

wherein $R^3$ has the abovementioned meaning, in the presence of 0.2 to 14 mol of an alkali metal hydroxide or alkaline earth metal hydroxide in 0.7 to 1.0 l water in a manner which is known per se, and the resulting reaction mixture, which contains the cyclodextrin substituted by ionic groups, is reacted with — per mol cyclodextrin present in the mixture — 5 to 15 mol of epichlorohydrin or a diepoxy derivative of the formula

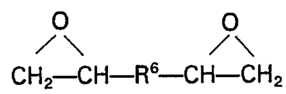

(II)

wherein $R^6$ denotes a direct bond,

$$—CH_2—O—CH_2—,\ —CH_2—O—CH_2—CH_2—O—CH_2—$$
$$\text{or } —CH_2—O—(CH_2)_4—O—CH_2—$$

after addition of 5 to 15 mol alkali metal hydroxide or alkaline earth metal hydroxide and 1.8 to 2.5 l water, at a temperature in the range of from 40 to 80°C, or

b) one mole α-, β- or γ-cyclodextrin is reacted with 0.1 to 7 mol of a halogen derivative of the formula

$$R^{2''}—Hal$$

wherein Hal and $R^{2''}$ have the abovementioned meaning, or with a sultone derived from a hydroxysulphonic acid of the formula

$$HO—R^3—SO_2OH$$

wherein $R^3$ has the abovementioned meaning, or with a primary or secondary amine or a hydroxy compound of the formula

$$R^{2''}—OH$$

wherein $R^{2''}$ has the abovementioned meaning, and with 5 to 15 mol of epichlorohydrin or a diepoxy derivative of the formula II, wherein $R^6$ has the abovementioned meaning, in the presence of 5 to 20 mol alkali metal hydroxide or alkaline earth metal hydroxide and 2.5 to 3.5 l water, or

c) a cyclodextrin polymer solution obtained in a manner which is known per se from 1 mol α-, β- or γ-cyclodextrin by reaction with 5 to 15 mol alkali metal hydroxide or alkaline earth metal hydroxide, 2.5 to 3.5 l water and 5 to 15 mol of epichlorohydrin or a diepoxy derivative of the general formula II, wherein $R^6$ has the abovementioned meaning, is reacted with — per mol of the cyclodextrin contained therein — 0.1 to 7 mol of a halogen derivative of the formula

$$R^{2''}—Hal$$

wherein Hal and $R^{2''}$ have the abovementioned meaning, or with a sultone derived from a hydroxysulphonic acid of the formula

$$HO—R^3—SO_2OH$$

wherein $R^3$ has the abovementioned meaning, in the presence of 0.2 to 14 mol alkali metal hydroxide or alkaline earth metal hydroxide, or

d) to prepare cyclodextrin polymers containing structural units of the formula I wherein $R^2$ and/or $R^{2'}$ denote the abovementioned inorganic or organic acyl groups, and the other substituents have the abovementioned meaning, one mol α-, β- or γ-cyclodextrin is reacted with 5 to 15 mol alkali metal hydroxide or alkaline earth metal hydroxide, 2.5 to 3.5 l water and 5 to 15 mol of epichlorohydrin or a diepoxy derivative

of the formula II, wherein $R^6$ has the above mentioned meaning, in a manner which is known per se, and the resulting cyclodextrin polymer is reacted, while heating, with the corresponding inorganic or organic anhydride in the presence of an organic solvent and/or an acid-binding agent or with the salt of the corresponding acid in the absence of an organic solvent and/or acid-binding agent, and after removal of the low molecular weight by-products, the dissolved salts and the water, the cyclodextrin polymer substituted by ionic groups is isolated in solid form from the reaction mixture obtained by process a), b), c) or d).

3. Process according to claim 2, characterized in that α, β- or γ-cyclodextrin or unsubstituted α, β- or γ-cyclodextrin polymer is used as the cyclodextrin component.

4. Process according to claim 2 or 3, characterized in that to prepare polymers containing structural units of the formula I wherein X and/or $—O—R^2$ and/or $—O—R^{2'}$ denote

$$—O—CH_2—COOH$$

chloroacetic acid is used as the halogen derivative of the formula

$$R^{2''}—Hal$$

5. Process according to claim 2 or 3, characterized in that to prepare polymers containing structural units of the formula I wherein X and/or $—O—R^2$ and/or $—O—R^{2'}$ denote

$$—O—CH_2—CH_2—CH_2—SO_2OH$$

propanesultone is used as the sultone derived from a hydroxysulphonic acid of the formula

$$HO—R^3—SO_2OH$$

6. Process according to claim 2b) or 3, characterized in that to prepare polymers containing structural units of the formula I wherein X denotes $—N(CH_3)_2$ dimethylamine is used as the secondary amine.

7. Process according to claim 2d) or 3, characterized in that to prepare polymers containing structural units of the formula I wherein $R^2$ and/or $R^{2'}$ denote

$$—CO—(CH_2)_2—COOH \text{ or } —CO—(CH_2)_4—COOH$$

succinic anhydride or adipic anhydride is used as the organic acid anhydride.

8. Process according to claim 2d) or 3, characterized in that to prepare polymers containing structural units of the formula I wherein $R^2$ and/or $R^{2'}$ denote $—SO_2OH$ sulphur trioxide in the form of its triethylamine complex is used as the inorganic acid anhydride.

9. Process according to claim 2d) or 3, characterized in that to prepare polymers containing structural units of the formula I wherein $R^2$ and/or $R^{2'}$ denote $—PO(OH)_2$, the unsubstituted cyclodextrin polymer is reacted with a mixture of sodium dihydrogen phosphate and disodium hydrogen phosphate, while heating.

10. Process according to one of claims 2 to 9, characterized in that epichlorohydrin or ethylene glycol di-(epoxypropyl) ether is used for crosslinking cyclodextrin.

**Claims for the Contracting State: AT**

1. Process for the preparation of water-soluble cyclodextrin polymers which are substituted by ionic groups and contain structural units of the general formula

$$\overset{(OR^{2'})_s}{\overset{|}{CD}}\left[O—(CH_2—\overset{OR^2}{\overset{|}{CH}}—R—O)_m—\overset{(OR^{2'})_t}{\overset{|}{CD}}\{[(O—CH_2—\overset{OR^2}{\overset{|}{CH}}—R')_n X]_r\}\right]_p \qquad (I)$$

wherein

CD denotes a group obtained from an α-, β- or γ-cyclodextrin molecule by splitting of p+s or 1+t+r hydroxyl groups,

R and R' independently of one another denote

$$—CH_2—, —CHOH—CH_2—, —CH_2—O—(CH_2)_2—O—CH_2—CHOH—CH_2—, —CH_2—O—CH_2—CHOH—CH_2— \text{ or}$$

$$—CH_2—O—(CH_2)_4—O—CH_2—CHOH—CH_2—$$

X denotes a secondary or tertiary amino group, $—OR^1$ or $—OR^2$, wherein

$R^1$ denotes hydrogen or — if r is not 0 — a group obtained from an α-, β- or γ-cyclodextrin molecule by splitting off a hydroxyl group,

$R^2$ which can have identical or different meanings, denotes hydrogen, $—PO(OH)_2—$, $—SO_2OH$, $—R^3—(COOH)_u$, $—R^3—(SO_2OH)_u$, $—R^3—(NR^4R^5)_u$ or a group obtained from an α-, β- or γ-cyclodextrin molecule by splitting off a hydroxyl group,

or one, two or three $R^2$ substituents together form a group of the formula $—R^3—NR^4—R^3—$ or $(—R^3—)_3N$,

$R^{2'}$ has the same meaning as $R^2$, but does not denote the groups obtained from the cyclodextrin molecules,

$R^3$ denotes a (u+l)-valent group obtainable from an alkane or an araliphatic hydrocarbon having 1—10 C atoms, in which the terminal carbon atom closer to the polymer chain can optionally be substituted by an oxo group,

$R^4$ and $R^5$ independently of one another denote hydrogen, optionally halogen-substituted $C_{1-4}$-alkyl, aryl having 6—10 C atoms or an aralkyl or alkaryl group obtainable by combination thereof,

m and n independently of one another denote an integer from 1 to 10,

r denotes an integer from 0 to 23,

p denotes an integer from 1 to 24,

s and t independently of one another denotes an integer from 0 to 7 and

u denotes an integer from 1 to 5, with the condition that

m, n, r, t and u, including in the side chains, can vary within a unit,

and if

CD is a group obtained from an α-cyclodextrin, $p+s\leq18$ and $r+t\leq17$,

and if

CD is a group obtained from an β-cyclodextrin, $p+s\leq21$ and $r+t\leq20$,

and if

CD is a group obtained from an γ-cyclodextrin, $p+s\leq24$ and $r+t\leq23$,

the CD content of which is 30—70% and which have an average MW of 2,000—15,000,

characterized in that

a) one mol α-, β- or γ-cyclodextrin is reacted with 0.1 mol to 7 mol of a halogen derivative of the formula:

$$R^{2''}—Hal$$

wherein Hal is halogen and $R^{2''}$ has the same meaning as $R^{2'}$, but is not hydrogen, $—PO(OH)_2$ or $—SO_2OH$, or

with 0.1 to 7 mol of a sultone derived from a hydroxysulphonic acid of the formula

$$HO—R^3—SO_2OH$$

wherein $R^3$ has the abovementioned meaning, in the presence of 0.2 to 14 mol of an alkali metal hydroxide or alkaline earth metal hydroxide in 0.7 to 1.0 l water in a manner which is known per se, and the resulting reaction mixture, which contains the cyclodextrin substituted by ionic groups, is reacted with — per mol cyclodextrin present in the mixture — 5 to 15 mol of epichlorohydrin or a diepoxy derivative of the formula

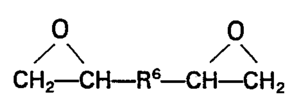

(II)

wherein $R^6$ denotes a direct bond,

$$—CH_2—O—CH_2—,\ —CH_2—O—CH_2—CH_2—O—CH_2—$$

$$\text{or } —CH_2—O—(CH_2)_4—O—CH_2—$$

after addition of 5 to 15 mol alkali metal hydroxide or alkaline earth metal hydroxide and 1.8 to 2.5 l water, at a temperature in the range of from 40 to 80°C, or

b) one mol α-, β- or γ-cyclodextrin is reacted with 0.1 to 7 mol of a halogen derivative of the formula

$$R^{2''}—Hal$$

wherein Hal and $R^{2''}$ have the abovementioned meaning, or with a sultone derived from a hydroxysulphonic acid of the formula

$$HO—R^3—SO_2OH$$

wherein $R^3$ has the abovementioned meaning, or with a primary or secondary amine or a hydroxy compound of the formula

$$R^{2''}—OH$$

wherein $R^{2''}$ has the abovementioned meaning, and with 5 to 15 mol of epichlorohydrin or a diepoxy derivative of the formula II, wherein $R^6$ has the abovementioned meaning, in the presence of 5 to 20 mol alkali metal hydroxide or alkaline earth metal hydroxide and 2.5 to 3.5 l water, or

c) a cyclodextrin polymer solution obtained in a manner which is known per se from 1 mol α-, β- or γ-cyclodextrin by reaction with 5 to 15 mol alkali metal hydroxide or alkaline earth metal hydroxide, 2.5 to 3.5 l water and 5 to 15 mol of epichlorohydrin or a diepoxy derivative of the general formula II, wherein $R^6$ has the abovementioned meaning, is reacted with — per mol of the cyclodextrin contained therein — 0.1 to 7 mol of a halogen derivative of the formula

$$R^{2''}—Hal$$

wherein Hal and $R^{2''}$ have the abovementioned meaning, or with a sultone derived from a hydroxysulphonic acid of the formula

$$HO—R^3—SO_2OH$$

wherein $R^3$ has the abovementioned meaning, in the presence of 0.2 to 14 mol alkali metal hydroxide or alkaline earth metal hydroxide, or

d) to prepare cyclodextrin polymers containing structural units of the formula I wherein $R^2$ and/or $R^{2'}$ denote the abovementioned inorganic or organic acyl groups, and the other substituents have the abovementioned meaning, one mol α-, β- or γ-cyclodextrin is reacted with 5 to 15 mol alkali metal hydroxide or alkaline earth metal hydroxide, 2.5 to 3.5 l water and 5 to 15 mol of epichlorohydrin or a diepoxy derivative of the formula II, wherein $R^6$ has the above mentioned meaning, in a manner which is known per se, and the resulting cyclodextrin polymer is reacted, while heating, with the corresponding inorganic or organic anhydride in the presence of an organic solvent and/or an acid-binding agent or with the salt of the corresponding acid in the absence of an organic solvent and/or acid-binding agent, and after removal of the low molecular weight by-products, the dissolved salts and the water, the cyclodextrin polymer substituted by ionic groups is isolated in solid form from the reaction mixture obtained by process a), b), c) or d).

2. Process according to claim 1, characterized in that α-, β- or γ-cyclodextrin or unsubstituted α-, β- or γ-cyclodextrin polymer is used as the cyclodextrin component.

3. Process according to claim 1 or 2, characterized in that to prepare polymers containing structural units of the formula I wherein X and/or $—O—R^2$ and/or $—O—R^{2'}$ denote

$$—O—CH_2—COOH$$

chloroacetic acid is used as the halogen derivative of the formula

$$R^{2''}—Hal$$

4. Process according to claim 1 or 2, characterized in that to prepare polymers containing structural units of the formula I wherein X and/or $—O—R^2$ and/or $—O—R^{2'}$ denote

$$—O—CH_2—CH_2—CH_2—SO_2OH$$

propanesultone is used as the sultone derived from a hydroxysulphonic acid of the formula

$$HO—R^3—SO_2OH$$

5. Process according to claim 1b) or 2, characterized in that to prepare polymers containing structural units of the formula I wherein X denotes $—N(CH_3)_2$ dimethylamine is used as the secondary amine.

6. Process according to claim 1d) or 2, characterized in that to prepare polymers containing structural units of the formula I wherein $R^2$ and/or $R^{2'}$ denote

$$—CO—(CH_2)_2—COOH \text{ or } —CO—(CH_2)_4—COOH$$

succinic anhydride or adipic anhydride is used as the organic acid anhydride.

7. Process according to claim 1d) or 2, characterized in that to prepare polymers containing structural units of the formula I wherein $R^2$ and/or $R^{2'}$ denote $—SO_2OH$ sulphur trioxide in the form of its triethylamine complex is used as the inorganic acid anhydride.

8. Process according to claim 1d) or 2, characterized in that to prepare polymers containing structural units of the formula I wherein $R^2$ and/or $R^{2'}$ denote $—PO(OH)_2$, the unsubstituted cyclodextrin polymer is reacted with a mixture of sodium dihydrogen phosphate and disodium hydrogen phosphate, while heating.

9. Process according to one of claims 1 to 8, characterized in that epichlorhydrin or ethylene glycol di-(epoxypropyl) ether is used for crosslinking cyclodextrin.